# FASCICULE DE BREVET EUROPEEN

(11) **EP 4 278 282 B1**
(45) Date de publication et mention de la délivrance du brevet: **10.09.2025**
(21) Numéro de dépôt: 22702761.2
(22) Date de dépôt: 11.01.2022
(51) Int. Cl.: G06F 21/34, G06F 21/44

(54) **PROCEDE ET SYSTEME DE CONTROLE D'ACCES**
VERFAHREN UND SYSTEM ZUR ZUGANGSKONTROLLE
METHOD AND SYSTEM FOR ACCESS CONTROL

(30) Priorité: 12.01.2021 FR 2100253
(43) Date de publication de la demande: 22.11.2023
(73) Titulaire: LA POSTE, 75015 Paris (FR)
(72) Inventeur: MARCENAC, Guy, 34200 Sete (FR); BOCQUIER, Bruno, 44300 Nantes (FR); MARIN, Pascal, 44240 La Chapelle sur Erdre (FR)
(74) Mandataire: Novagraaf Technologies
(86) Numéro de dépôt international: PCT/FR2022/050062
(87) Numéro de publication internationale: WO 2022/153005

(56) Documents cités:
- WO-A1-97/40474
- US-A1- 2005 033 962

## Description

La présente invention concerne un procédé et un système de contrôle d'accès physique. Plus particulièrement, l'invention concerne le domaine du contrôle d'accès physique à un espace protégé, par exemple à un bâtiment ou toutes sortes de lieux ou équipements dont l'accès ou l'utilisation doivent être contrôlés, pour des prestataires de services devant intervenir dans l'espace protégé.

L'arrivée des technologies numériques et particulièrement des technologies dites sans contact qui utilisent au moins un support a permis le déploiement et la généralisation de systèmes de contrôles d'accès physiques comprenant des moyens électroniques et un dispositif de verrouillage, connecté à un dispositif de lecture, pour sécuriser l'accès physique à un espace protégé.

Par support, au sens de la présente invention, on entend un support configuré pour contenir au moins une donnée électronique et disposant d'une unité de traitement.

Par exemple, comme support, on peut avoir un badge utilisant le procédé de radio-identification (communément désigné par l'acronyme RFID) ou un dispositif mobile tels que des téléphones mobiles ou toute autre unité de traitement apte à supporter une ou plusieurs données électroniques transmissibles via une technologie de contact ou sans contact.

La méthode la plus connue de verrouiller les accès d'un bâtiment consiste à placer un dispositif de lecture, qui peut être un lecteur électronique et qui est connecté à un dispositif de verrouillage, à l'entrée d'un bâtiment et à distribuer aux usagers résidents un badge individuel comme support. Ce badge individuel partage un secret avec ledit lecteur électronique qui est associé à une unité centrale de sorte à former un ensemble lecteur centrale. Ainsi, lors d'une transaction électronique entre le badge et l'ensemble lecteur-centrale, cette dernière vérifie l'authenticité du badge, et par extension de son porteur, grâce au partage du secret qui est commun au badge et à l'ensemble lecteur-centrale. Dans ce mode, l'ensemble lecteur-centrale et le badge doivent tout deux stocker et protéger un secret commun. On parle dans ce cas de schéma de sécurité à clé secrète.

Le mécanisme d'authentification peut employer trois types de clés :
- Une clé symétrique unique, la même clé secrète est employée par tous les badges et par tous les ensembles lecteurs-centrales. Cette distribution à grande échelle représente un risque pour cette clé, qui pourrait être compromise par l'attaque matérielle d'un badge, ou d'un des ensembles lecteurs-centrales;
- Des clés symétriques dérivées d'une clé maîtresse, chaque badge contient une clé différente, qui est dérivée par un mécanisme de chiffrement ou cryptographique à partir d'une clé maîtresse et d'un identifiant unique (ci-après désigné par l'acronyme UID) propre à chaque badge. L'UID est également contenu dans le badge.

Lors du contrôle, l'ensemble lecteur- centrale demande l'identifiant unique UID du badge, puis, à partir de la clé maîtresse et de l'UID du badge (numéro unique), régénère la même clé dérivée, ce qui permet d'authentifier ce badge. L'avantage de cette approche est que l'attaque matérielle d'un badge ne permet que de la cloner. Elle ne permet pas d'en forger une différente, car la clé maîtresse n'est pas présente au sein du badge. En revanche, la clé maîtresse doit être employée par l'ensemble lecteur-centrale lors de chaque authentification ou vérification.

Pour ce faire, le dispositif de lecture, lui-même connecté à l'unité centrale, peut par exemple être placé à proximité d'une entrée d'un espace protégé, par exemple à proximité d'une porte accédant à un bâtiment dont on souhaite en contrôler l'accès. Dans ce cas, est distribué aux potentiels utilisateurs, par exemple aux usagers résidents du bâtiment, un support apte à émettre au moins une donnée de demande d'accès et qui est apte à être reçue par le dispositif de lecture de manière à autoriser ou non l'accès physique audit bâtiment. Pour autoriser ou non l'accès audit bâtiment, lorsque le support se trouve à proximité du dispositif de lecture, a lieu une transmission ou un échange électronique entre le support individuel qui, au moins, transmet sa donnée de demande d'accès à l'ensemble lecteur-centrale. Dans cette situation, ladite donnée de demande d'accès supportée transmise par le support est vérifiée par un mécanisme d'authentification, avec au moins une clé stockée dans l'unité centrale de manière à identifier ledit support, et dans certains cas à identifier son utilisateur par extension. Dans cette configuration, l'ensemble lecteur-centrale et le support doivent donc tout deux stocker et protéger au moins une clé.

Le mécanisme d'authentification peut être mis en oeuvre selon trois procédés distincts.
- Un premier procédé met en oeuvre une clé symétrique unique (mécanisme d'authentification symétrique unique) qui permet de chiffrer et/ou déchiffrer la donnée de demande d'accès échangée entre au moins le support, qui peut être individuel et appartenir à un usager particulier, et l'unité centrale connectée au dispositif de lecture. Ici, la clé symétrique unique émise par chacun des supports individuels des usagers est la même que celle stockée par l'unité centrale. Selon ce premier procédé, le fait que tous les usagers disposent d'une même clé symétrique unique représente un risque dans la mesure où une attaque matérielle d'un seul support individuel, ou de l'unité centrale, compromettrait la protection engagée.
- Un deuxième procédé met en œuvre plusieurs clés symétriques dérivées d'une clé maîtresse (mécanisme d'authentification symétrique dérivé). Ici, chaque support individuel contient alors une clé symétrique dérivée et différente les unes des autres. Cette clé symétrique dérivée différente est attribuée à chacun des supports individuels après l'application d'un mécanisme de chiffrement à partir au moins de la clé maîtresse et de l'identifiant unique UID associé à chacun des supports individuels. L'identifiant unique UID du support fait partie des données contenues dans chacun des supports individuels.

Selon ce deuxième procédé, lors de l'échange électronique entre le support individuel et l'ensemble lecteur-centrale, l'ensemble lecteur-centrale demande l'UID du support individuel, puis, à partir de la clé maîtresse et de l'UID du support individuel, régénère la clé symétrique dérivée attribuée au support individuel contrôlé, ce qui permet d'identifier (vérifier ou encore authentifier) le support individuel contrôlé et par suite, permet au dispositif de lecture de lire la donnée de demande d'accès échangée. L'avantage de ce deuxième procédé est lié au fait qu'une attaque matérielle d'un support individuel ne permet que de dupliquer des supports configurés pour accéder à l'espace protégé. En particulier, suite à une telle attaque, il n'est pas possible de fabriquer davantage de supports configurés pour accéder à l'espace protégé, car la clé maîtresse n'est contenue dans aucun des supports individuels. En revanche, la clé maîtresse doit être utilisée par l'ensemble lecteur-centrale lors de chaque contrôle de support.

Ce deuxième procédé, très répandu, est particulièrement adapté pour une solution qui concerne les usagers résidents des bâtiments. En effet, cette relation forte existante entre l'ensemble lecteur-centrale et chacun des supports individuels impose à l'ensemble lecteur-centrale d'être connu, géré et de partager une clé maîtresse avec un ou plusieurs individus autorisés à sélectionner les supports individuels autorisés à accéder au bâtiment dont l'accès est contrôlé par l'ensemble lecteur-centrale. Par ailleurs, avec la mise en oeuvre de ce deuxième procédé, un support individuel permettra uniquement l'accès au seul bâtiment pour lequel son accès a effectivement été autorisé au préalable. Autrement dit, pour accéder à plusieurs bâtiments, il est nécessaire d'avoir autant de supports individuels autorisés que de bâtiments. Ainsi, selon ce deuxième procédé, les contraintes de sécurité imposées aux supports individuels restent toutefois assez limitées du fait que chaque support individuel ne donne accès qu'à un seul bâtiment.
- Un troisième procédé met en oeuvre plusieurs clés asymétriques (mécanisme d'authentification asymétrique). Ici, à chaque ensemble lecteur-centrale et à chaque support individuel est attribuée une paire de clé différente les unes des autres, l'une dite publique l'autre dite privée. Ainsi, avec une telle configuration, les échanges électroniques, contenant la donnée de demande d'accès entre le support et le dispositif de lecture se trouvant à proximité peuvent être authentifiés par les clés publiques échangées à partir des signatures générés au moyens de ces clés privée non échangées Plus flexible, ce troisième procédé permet de protéger davantage les clés privées associées à chaque support individuel et ensemble lecteur-centrale en n'utilisant qu'une clé publique et un ou plusieurs échanges électroniques chiffrés.

La création et la gestion de l'ensemble des clés mises en oeuvre dans les supports individuels et dans les ensembles lecteurs-centrales sont des opérations opportunes pour effectivement sécuriser les accès contrôlés par leurs utilisations. Lors de ces opérations, il est donc opportun d'assurer la protection des clés secrètes dans la mesure où la sécurité des accès contrôlés repose sur leurs utilisations.

Dans certaines situations, l'accès à différents bâtiments, dont l'accès est contrôlé par autant d'ensembles lecteurs-centrales que de bâtiments, n'est pas uniquement autorisé à chacun des usagers résidents dans un des bâtiments et détenant un support individuel. En effet, l'accès à ces différents bâtiments peut également être autorisé à plusieurs tiers, par exemple à plusieurs personnes appartenant à un prestataire de service. Dans cette situation, il est avantageux d'autoriser l'accès à chacune des personnes appartenant au prestataire de service à chacun des bâtiments à l'intérieur desquels la prestation doit s'appliquer.

Pour ce faire, il existe actuellement un système, celui décrit dans la demande internationale WO9602899, qui permet à la fois de protéger un espace et également à certains supports individuels de permettre l'accès à cet espace pendant une période limitée et renouvelable. Pour ce faire, la donnée de demande d'accès à échanger comprise dans certains desdits supports est chiffrée et ne peut être chiffrée que suite à des échanges électroniques adaptés entre l'ensemble lecteur-centrale et le support. En particulier, le déchiffrement se fait qu'après réception par le support d'une clé adaptée transmise par l'ensemble lecteur-centrale. Ladite clé adaptée peut être renouvelée à souhait. Dans ce cas, il n'est plus nécessaire d'avoir à constituer une liste noire de supports perdus, volés ou dupliqués, ni d'avoir à gérer de telles listes car, un support volé, perdu ou dupliqué ne permettra pas d'accéder à l'espace protégé en dehors de la période limitée autorisée si celle-ci n'est pas renouvelée via la génération d'une nouvelle clé adaptée.

Dans ce système, la donnée de demande d'accès chiffrée à échanger et comprise dans certains desdits supports permet l'accès à l'espace protégé après son déchiffrement suite à la réception, par l'ensemble lecteur-centrale, de ladite clé adaptée et l'intervention d'une signature électronique de données relatives à une période prédéterminée d'utilisation d'accès limitant la validité d'utilisation du support dans lequel la donnée de demande d'accès chiffrée à échanger est mémorisée. La signature électronique de données peut également être mémorisée dans le support. Ainsi, la sécurité de l'espace protégé repose en partie sur la période limitée de validité de ladite donnée de demande d'accès chiffrée à échanger et mémorisée dans le support.

Néanmoins, différents inconvénients subsistent dans ce système :
- le clonage des supports donne accès pendant toute la durée de validité des supports à tout porteur de support sans restriction d'activité ou de service, sur tous les bâtiments situés sur tout le territoire disposant de contrôle d'accès et d'autorisations conformes au mécanisme utilisé ;
- une relation de partage au moins d'une donnée secrète et/ou chiffrée est nécessaire entre les ensembles lecteurs-centrales et les supports. Il est ainsi nécessaire aux dispositifs configurés pour transférer des données d'accès sur le support, de partager également la donnée secrète et/ou chiffrée avec les ensembles lecteurs-centrales d'un parc de bâtiments sur lesquels les supports vont être présentés. les documents suivants constituent aussi des documents pertinents sur l'état de la technique: WO 97/40474 A1, US 2005/033962 A1.

Un des buts de l'invention est de remédier aux insuffisances des systèmes et procédés de contrôle d'accès de l'état de la technique. Selon un premier aspect, l'invention concerne un procédé de contrôle d'accès dans un système de contrôle d'accès comprenant :
- un support au moins défini par un identifiant unique préalablement signé et authentifiable, ledit support étant configuré pour supporter au moins une donnée de demande d'accès signée ;
- un système de gestion de données comprenant plusieurs enregistrements, chaque enregistrement représentant une donnée spécifique, et chaque donnée spécifique étant fonction d'un des paramètres suivants :
   ∘ un identifiant d'un utilisateur autorisé ;
   ∘ une information d'une période autorisée ;
   ∘ une information d'une plage horaire autorisée ;
   ∘ une information d'une zone géographique autorisée ;
   ∘ une information d'une activité dudit utilisateur autorisé ;
- un dispositif de génération d'une donnée de demande d'accès à signer à partir de plusieurs desdites données spécifiques et de l'identifiant unique du support,
- des moyens de lecture de l'identifiant unique dudit support destinataire de la donnée de demande d'accès signée, lesdits moyens de lecture étant connectés audit dispositif de génération,
- des moyens de signature de ladite donnée de demande d'accès à signer pour obtenir une donnée de demande d'accès signée comprenant une première donnée représentative des plusieurs desdites données spécifiques, une deuxième donnée relative audit identifiant unique du support, et une donnée signature,
- un dispositif de transfert configuré pour transférer ladite donnée de demande d'accès signée audit support, ledit dispositif de transfert étant connecté auxdits moyens de signature et audit système de gestion ;
- un dispositif de lecture configuré pour lire ladite donnée de demande d'accès signée dudit support et pour transmettre un signal d'autorisation d'accès à un dispositif de verrouillage;
- des premiers moyens d'authentification connectés audit dispositif de lecture et configurés pour authentifier ladite donnée de demande d'accès signée ;
- des deuxièmes moyens d'authentification connectés audit dispositif de lecture et configurés pour authentifier le support;
- des moyens de vérification connectés audit dispositif de lecture et configurés pour vérifier la donnée signature de ladite donnée de demande d'accès signée ;
- des premiers moyens de comparaison connectés audit dispositif de lecture et configurés pour comparer l'identifiant unique du support avec ladite deuxième donnée de ladite donnée de demande d'accès signée ;
- des deuxièmes moyens de comparaison connectés audit dispositif de lecture et à une base référentielle de données dans lesquels sont inscrits un ou plusieurs sous-ensembles de données spécifiques, chaque sous-ensemble étant représentatif d'une autorisation d'accès prédéfinie qui est fonction de plusieurs desdits paramètres, lesdits deuxièmes moyens de comparaison étant configurés pour comparer la première donnée de ladite donnée de demande d'accès signée avec lesdits sous-ensembles de données ;
ledit procédé de contrôle d'accès étant exécuté par ledit système de contrôle d'accès et comprenant :
- une étape d'enregistrement desdites données spécifiques dans ledit système de gestion de données ;
- une étape de fourniture du support défini par un identifiant unique préalablement signé et authentifiable,
- une étape, via lesdits moyens de lecture, de lecture de l'identifiant unique dudit support,
- une étape, via ledit dispositif de génération, de génération de ladite donnée de demande d'accès à signer ladite étape de génération de ladite donnée de demande d'accès à signer étant réalisée après ladite étape de lecture de l'identifiant unique préalablement signé dudit support ;
- une étape, via lesdits moyens de signature, de signature de ladite donnée de demande d'accès à signer et de l'identifiant unique du support pour obtenir ladite donnée de demande d'accès signée ;
- une étape de transfert de ladite donnée de demande d'accès signée depuis ledit dispositif de transfert vers ledit support défini par l'identifiant unique de la deuxième donnée de ladite donnée de demande d'accès signée ;
- une étape d'inscription dans la base référentielle de données desdits un ou plusieurs sous-ensembles de données spécifiques,
- une étape, via ledit dispositif de lecture, de lecture de ladite donnée de demande d'accès signée supportée par ledit support ;
- une étape d'authentification, via lesdits deuxièmes moyens d'authentification, du support,
- une étape d'authentification, via lesdits premiers moyens d'authentification, de ladite donnée de demande d'accès signée et une étape de vérification, via lesdits moyens de vérification, de la donnée signature de ladite donnée de demande d'accès signée, et
- une étape, via lesdits premiers moyens de comparaison, de comparaison de l'identifiant unique définissant le support avec celui de la deuxième donnée de ladite donnée de demande d'accès signée,
- une étape, via lesdits deuxième moyens de comparaison, de comparaison de la première donnée de ladite donnée de demande d'accès signée avec lesdits sous-ensembles inscrits dans la base référentielle de données ;
- une étape de transmission dudit signal d'autorisation d'accès depuis ledit dispositif de lecture vers ledit dispositif de verrouillage.

Au sens de la présente invention, par connecté, on entend directement ou indirectement relié par des moyens physiques ou des moyens de communications.

Au sens de la présente invention, par utilisateur, on entend une personne morale ou physique. Par exemple, comme utilisateur, on peut avoir un prestataire de service auquel sont rattachés plusieurs individus.

Au sens de la présente invention, par période, on entend une période temporelle définie arbitrairement représentant une durée de validité relativement courte.

Au sens de la présente invention, par plage horaire, on entend une durée qui s'intègre dans la période. Cette plage horaire pouvant donc être considérée comme étant un sous-ensemble de la période.

Au sens de la présente invention, par activité, on entend une prestation qui doit être pratiquée à l'intérieur de l'espace protégé.

Au sens de la présente invention, par zone géographique, on entend une couverture géographique à l'intérieur de laquelle se trouve au moins un dispositif de verrouillage.

Au sens de la présente invention, par identifiant unique préalablement signé et authentifiable, on entend un identifiant qui aura été associé au support et qui est indépendant de l'identifiant constructeur de ce support. Cela permet également de pouvoir virtualiser le support, c'est-à-dire d'établir son propre identifiant unique via sa signature de sorte à ce qu'il soit authentifiable par des éléments du système de contrôle. Cette signature peut être réalisée par des moyens signatures externes au système de contrôle.

Ainsi, il est possible de rendre le support non falsifiable car dépendant de l'identifiant unique signé dont l'identifiant unique après lecture est intégré dans la donnée de demande d'accès afin de permettre une virtualisation des supports qui ne seront plus nécessairement dépendant de la fourniture d'un identifiant constructeur.

Ainsi, il est possible d'utiliser une mémoire volatile de type RAM comme celles présente à volonté dans les téléphones mobile par exemple, puisque l'identifiant unique du support peut être regénéré et différent à chaque chargement. Le support de donnée ne nécessite donc pas d'EEPROM.

Avec un tel procédé, lorsque le support supportant la demande d'accès signée est reproduit ou cloné après que son utilisateur initial l'a perdu ou se l'est fait voler par exemple, une modification d'une desdites données spécifiques d'un sous-ensemble représentatif d'une autorisation d'accès prédéfinie et/ou une modification de la donnée signature et/ou une modification de la donnée de demande d'accès à signer initialement générée et/ou une modification dudit identifiant unique du support supportant la donnée de demande d'accès signée et/ou une modification de la première donnée et/ou de la deuxième donnée de la donnée de demande d'accès signée ne permettront pas le déverrouillage du dispositif de verrouillage. En particulier, si une au moins des modifications ci-dessus est appliquée, la donnée de demande d'accès signée ne pourra pas être authentifiée par les moyens d'authentification durant l'étape d'authentification, et/ou l'étape de comparaison de l'identifiant unique définissant le support avec celui de la deuxième donnée de la donnée demande d'accès signée ne sera pas concluante, et/ou l'étape de comparaison de la première donnée de la donnée de demande d'accès avec lesdits sous-ensembles ne sera pas concluante, de sorte que l'étape de transmission du signal d'autorisation d'accès n'aura pas lieu. Ainsi, sans partage de données secrètes entre le dispositif de transfert et le support, et/ou entre le support et le dispositif de lecture, on obtient un procédé de contrôle d'accès robuste et adapté à de multiples situations d'autorisations qui sont au moins fonction des utilisateurs, de périodes temporelles, de zones géographiques, ou encore d'activités des utilisateurs pour chaque dispositifs de verrouillage protégeant un espace particulier et se trouvant dans une zone géographique prédéfinie.

À l'aide de ce procédé, seul le support dispose des données de demande d'accès, les utilisateurs sont seulement aptes à les vérifier. Aucune distribution des données de demande d'accès n'est nécessaire, ainsi un support pourra être authentifier sans jamais avoir de connexion ou relation de confiance avec l'utilisateur.

Le procédé selon l'invention implique donc au moins une double authentification avant celle de la donnée de demande d'accès signée supportée et transportée par le support : l'authentification du support par le dispositif de lecture, et également par les dispositifs de génération ou transfert, et l'authentification des dispositifs de génération ou transfert et le dispositif de lecture par le support.

Le système de contrôle d'accès peut comprendre plusieurs supports, plusieurs des moyens précités et plusieurs des dispositifs précités. Dans ce cas, l'identifiant unique de chaque support est différent les uns des autres et propre à un seul support.

Les enregistrements du système de gestion sont enregistrés et peuvent être modifiés à souhait uniquement par un tiers autorisé à gérer le système de gestion.

Chaque enregistrement du système de gestion de données peut représenter soit une unique donnée spécifique relative à un seul desdits paramètres mentionnés, soit relative à un ensemble de sous-enregistrements représentatif de plusieurs desdits paramètres mentionnés.

Le dispositif de génération, via les moyens de lecture de l'identifiant unique du support, lit l'identifiant unique du support sur lequel doit être transférée la donnée de demande d'accès signée.

Ainsi, en fonction des autorisations d'accès que l'on souhaite attribuer à l'utilisateur possédant le support, le dispositif de génération génère, à partir d'au moins un des enregistrements et de l'identifiant de ce support, la donnée de demande d'accès à signer qui permettra ou non la réalisation de l'étape de transmission du signal d'autorisation d'accès.

De préférence, le dispositif de génération est configuré pour générer une donnée de demande d'accès à signer à partir de plusieurs données spécifiques relatives à l'ensemble des paramètres précités et de l'identifiant unique du support.

La donnée de demande d'accès à signer peut alors être une donnée logique comportant :
- une première donnée représentative de plusieurs données spécifiques, chacune relative à l'identifiant de l'utilisateur autorisé, à l'information d'une période autorisée, à l'information d'une plage horaire autorisée, à l'information d'une zone géographique autorisée et l'information d'une activité de l'utilisateur autorisé, et
- une deuxième donnée logique relative à l'identifiant unique du support sur lequel doit être transférée la donnée de demande d'accès signée.

Ensuite, les moyens de signature sont utilisés pour signer la donnée de demande d'accès à signer de sorte à obtenir la donnée de demande d'accès signée comprenant entre autres la donnée signature.

Aussi, les moyens de signature peuvent être configurés pour modifier sa donnée signature, par exemple, à chaque fois que l'information d'une période autorisée est modifiée. Dance cas, le procédé de contrôle d'autorisation comprendra en outre une étape supplémentaire de signature pour modifier la signature de la donnée de demande d'accès précédemment signée afin de ne plus permettre la mise en oeuvre de l'étape de transmission du signal d'autorisation qui s'appliquait avec la donnée de demande d'accès précédemment signée. Ainsi, il est possible de renouveler autant de fois que de nécessaire l'autorisation d'accès en modifiant notamment la donnée signature.

Par exemple, la donnée signature peut être obtenue à l'aide de tout mécanisme cryptographique connu, à savoir des mécanismes de chiffrement, signature.

Les moyens de signature peuvent, par exemple, être aptes à produire la donnée signature sous la forme, par exemple, d'une signature électronique à partir d'une fonction de production fn et d'une clé privée Kpr.

Par ailleurs, il est à noter que la donnée de demande d'accès signée peut comprendre plusieurs données signatures. Par exemple, plusieurs données signatures peuvent être calculées et enregistrées par les moyens de signatures sur le support supportant une donnée de demande d'accès à signer, ces plusieurs signatures pouvant être obtenues à partir d'une taille de clé (Kn) différente les unes des autres et d'une fonction de production (fn) tel que 1^{ère} signature = f1(K1, donnée de demande d'accès à signer), une 2^{ème} signature = f1(K2, donnée de demande d'accès à signer), 3^{ème} signature = f2(K1, donnée de demande d'accès à signer), etc....

Après obtention de la donnée de demande d'accès signée, le dispositif de transfert la transfère sur le support correspondant à l'identifiant unique du support à partir duquel est générée la donnée de demande d'accès à signer.

Il est à noter que les fonctions dudit dispositif de transfert et dudit dispositif de génération peuvent être réalisées par un unique ensemble ou élément physique.

Le dispositif de lecture assure, sans partage de données secrètes et par un mécanisme d'authentification asymétrique, une fonction de contrôle d'accès électronique via les moyens d'authentification, de vérification et de comparaison.

Il est à noter que l'un ou plusieurs des moyens d'authentification, de vérification ou encore de comparaison sont directement ou indirectement connectés au dispositif de lecture. Il est donc possible que l'un ou plusieurs de ces moyens soient intégrés physiquement au dispositif de lecture ou distants de celui-ci mais communiquant avec lui.

Le dispositif de lecture associé aux moyens précités assure donc la mise en oeuvre de l'étape de transmission du signal d'autorisation d'accès uniquement dans le cas où le support et la donnée de demande d'accès signée ont été authentifiés par les moyens d'authentification, la donnée signature vérifiée, la comparaison de l'identifiant unique définissant le support avec celui de la deuxième donnée de la donnée demande d'accès signée a été concluante (c'est-à-dire que leur similitude a été constatée), et/ou la comparaison de la première donnée de la donnée de demande d'accès avec lesdits sous-ensembles a été concluante (c'est-à-dire que les données spécifiques relative à la première donnée de la donnée de demande d'accès signée correspondent à l'un des sous-ensembles inscrits dans la base référentielle de données). La première donnée de la donnée de demande d'accès signée est, par exemple, relative à l'ensemble des paramètres ci-dessous :
- la période autorisée,
- l'utilisateur autorisé associé à un identifiant désignant un prestataire de service autorisé,
- l'information d'activité du prestataire de service,
- la plage horaire durant laquelle l'accès est autorisé,
- la zone géographique à l'intérieur de laquelle la donnée de demande d'accès signée peut être authentifiée,
- la fenêtre horaire à l'intérieur de laquelle le dispositif de lecture est en fonctionnement pour lire la donnée de demande d'accès signée.

Ainsi, les premiers et deuxièmes moyens d'authentification sont configurés pour authentifier la donnée de demande d'accès signée et le support. Dans cette configuration, les étapes d'authentification sont, de préférence, mises en oeuvre sans échange supplémentaire sans partage de données secrètes entre le support et le dispositif de lecture.

Il est à noter que l'utilisateur, une fois que la période autorisée à partir de laquelle la donnée demande d'accès à signer a été générée (puis signée) a expiré, doit de nouveau transférer dans son support une nouvelle donnée de demande d'accès signée car la précédente ne permettra plus d'accéder à l'espace protégé.

Par exemple, les moyens d'authentification peuvent, par exemple, faire parties intégrantes du dispositif de lecture sans connexion avec un dispositif différent du dispositif de lecture lors de la mise en oeuvre de l'étape d'authentification de la donnée de demande d'accès signée pour autoriser le déverrouillage du dispositif de verrouillage. Ainsi, de préférence, le dispositif de lecture n'est pas en outre connecté à des moyens de traitements eux-mêmes connectés par exemple à un système central de données. Le dispositif de lecture peut alors fonctionner de manière autonome sans pouvoir être altéré par l'introduction ou l'extraction de données auxquelles il pourrait avoir accès par l'intermédiaire du système central de données par exemple.

De préférence, le procédé est caractérisé en ce qu'une nouvelle donnée de demande d'accès signée ou à signer est signée par les moyens de signature ou générée par le dispositif de génération à la demande de l'utilisateur du support pour chaque nouvelle durée d'utilisation dudit support. Ainsi, après expiration d'une durée prédéfinie, la donnée de demande d'accès qui aura été signée au préalable ne permettra plus d'accéder à l'espace protégé. En particulier, dans ce mode de réalisation, la signature de la donnée de demande d'accès signée peut ne plus être vérifiée par les moyens de vérification connectés au dispositif de lecture après expiration de cette durée. Par exemple, la durée peut être définie par une date de début et une date de fin, par une date de début et une durée de temps, ou encore par une date de fin et une durée de temps. Par exemple, à l'aide de cette durée d'utilisation, on peut donner accès à l'espace protégé pendant une durée très restreinte définie par une ou plusieurs journées calendaires et également par une plage horaire contenue dans lesdites une ou plusieurs journées.

De préférence, lorsque ledit support est configuré pour en outre supporter des données d'authentification et lorsque le dispositif de lecture est configuré pour recevoir les données d'authentification en provenance dudit support et est configuré pour les transmettre auxdits deuxièmes moyens d'authentification qui sont configurés pour recevoir les données d'authentification via ledit dispositif de lecture, ledit procédé comprend en outre : une étape de transmission de données d'authentification du support vers ledit dispositif de lecture ; et une étape de traitement, par ledit dispositif de lecture, desdites données d'authentification en provenance dudit support. Ainsi, l'étape d'authentification du support est assuré par la présente de données d'authentification qui s'additionnent à l'identifiant unique du support. Par exemple, ces données d'authentification peuvent être des certificats logiques.

De préférence, lorsque ledit support est configuré pour en outre supporter des données d'authentification, lorsque le dispositif de transfert est en outre connecté à des troisièmes moyens d'authentification configurés pour authentifier le support destinataire de la donnée de demande d'accès signée via les données d'authentification, lorsque le dispositif de transfert est en outre configuré pour recevoir des données d'authentification et les transmettre auxdits troisièmes moyens d'authentification qui sont configurés pour recevoir les données d'authentification via ledit dispositif de transfert, ledit procédé comprend en outre ; une étape de transmission de données d'authentification du support vers le dispositif de transfert ; et une étape de traitement, par ledit dispositif de transfert, desdites données d'authentification en provenance dudit support. Ce mode de réalisation présente l'avantage de permettre des échanges entre le dispositif de transfert et le support uniquement si le dispositif de transfert a pu au préalable authentifier le support destinataire.

Les données d'authentification du support peuvent être relatifs à l'identifiant unique préalablement signé supporté par le support, être fonction de celui-ci ou en être indépendant.

Il peut également être avantageux de permettre des échanges entre le dispositif de lecture et le support seulement si le support a au préalable authentifié le dispositif de lecture. C'est pourquoi, de préférence, lorsque ledit dispositif de lecture est en outre configuré pour transmettre des données d'authentification, lorsque le support est configuré pour recevoir et traiter lesdites données d'authentification en provenance dudit dispositif de lecture, ledit procédé comprend en outre :
- une étape de transmission de données d'authentification du dispositif de lecture vers ledit support ;
- un étape de traitement, par ledit support, desdites données d'authentification en provenance dudit dispositif de lecture.

Il peut également être avantageux de permettre des échanges entre le dispositif de transfert et le support seulement si le support a au préalable authentifié le dispositif de transfert. C'est pourquoi, de préférence, lorsque ledit dispositif de transfert est en outre configuré pour transmettre des données d'authentification, lorsque le support est configuré pour recevoir et traiter des données d'authentification en provenance dudit dispositif de transfert, ledit procédé comprend en outre :
- une étape de transmission de données d'authentification du dispositif de transfert vers ledit support,
- un étape de traitement, par ledit support, desdites données d'authentification en provenance dudit dispositif de transfert.

Il est à noter que chacune des données d'authentifications précitées et utilisées dans les étapes ci-avant mentionnées peuvent être les mêmes ou alors différentes.

De préférence, lorsque ledit support est configuré pour en outre supporter des données supplémentaires, lorsque le dispositif de lecture et/ou le dispositif de transfert sont configurés pour traiter lesdites données supplémentaires, le procédé comprend en outre :
- une étape de transfert desdites données supplémentaires du support vers le dispositif de lecture et/ou le dispositif de transfert, et
- une étape de traitement desdites données supplémentaires par ledit dispositif de lecture et/ou par ledit dispositif de transfert.

Ainsi, le support peut être configuré pour supporter davantage de données, notamment des données logiques, à échanger avec le dispositif de transfert et/ou le dispositif de lecture sans nécessairement que ces données à échanger soient des données secrètes.

Aussi, de préférence, lorsque ledit système de contrôle d'accès comprend en outre des moyens de chiffrement de ladite donnée de demande d'accès à signer ou de ladite donnée de demande d'accès signée,
- ledit dispositif de transfert est en outre configuré pour transférer ladite donnée de demande d'accès signée chiffrée audit support,
- ledit dispositif de lecture est en outre configuré pour lire et déchiffrer ladite donnée de demande d'accès signée chiffrée ,
ledit procédé comprend en outre :
une étape de chiffrement de ladite donnée de demande d'accès à signer ou de ladite donnée de demande d'accès signée, et
une étape de déchiffrement par ledit dispositif de lecture de ladite donnée de demande d'accès chiffrée et signée.

Par exemple, ces étapes de chiffrement et/ou de déchiffrement peuvent être réalisées à l'aide d'une clé de chiffrement et/ou déchiffrement éphémère générée pour la durée du transfert et/ou de la lecture.

Le dispositif de transfert peut lui aussi déchiffrer la donnée de demande d'accès chiffrée, et signée le cas échéant, lorsque que le support souhaite obtenir un nouvelle donnée de demande d'accès suite par exemple à la modification d'un paramètre d'un enregistrement relatif à au moins une donnée spécifique.

Ainsi, de préférence, lorsque :
- ledit dispositif de transfert est en outre configuré pour déchiffrer ladite donnée de demande d'accès signée chiffrée supportée par ledit support,
ledit procédé comprend en outre :
- une étape supplémentaire de déchiffrement de ladite donnée de demande d'accès signée chiffrée supportée par ledit support, et
- une étape de transfert d'une nouvelle donnée de demande d'accès signée chiffrée vers ledit support pour remplacer ladite donnée de demande d'accès signée chiffrée supportée par ledit support.

Le dispositif de transfert et le dispositif de lecture peuvent donc assurer ici une fonction de contrôle d'accès aptes à chiffrer et déchiffrer les échanges de données entre le support et le dispositif de transfert et/ou le dispositif de lecture toujours sans partage préalable de données secrètes.

Encore de préférence, lorsque ledit support est en outre configuré pour supporter des données de modification de ladite base référentielle de données, ledit procédé comprend en outre :
- une étape de transfert desdites données de modification dudit support vers ledit dispositif de lecture, et
- une étape de modification de ladite base référentielle de données par modification ou suppression d'un desdits sous-ensembles, ou par ajout d'un sous-ensemble supplémentaire.

La modification d'un des sous-ensembles peut consister à modifier les données spécifiques ou données signature

Ainsi, il est possible de modifier les sous-ensembles inscrits dans la base référentielle de les mettre à jour en utilisant uniquement le support et en garantissant davantage l'autonomie du dispositif de lecture. Ces mises à jour peuvent consister notamment en la modification de la donnée signature associée aux moyens de vérification de sorte à ce que la donnée signature de la donnée de demande d'accès initialement signée ne puisse plus être vérifiée ou encore en la modification d'au moins un des sous-ensembles inscrits dans la base référentielle de données de sorte à ce la comparaison réalisée par les deuxièmes moyens de comparaison ne puisse plus être concluant.

On peut alors avoir de préférence, un procédé selon lequel l'une ou plusieurs des étapes d'authentification et/ou l'une ou plusieurs des étapes de comparaison et/ou l'étape de vérification sont mises en oeuvre sans que les moyens employés dans ces étapes communiquent avec un quelconque élément extérieur audit système. Dans ce cas, les premiers et deuxièmes moyens de comparaison peuvent ne pas, par exemple, être connectés à une base internet par exemple. Ainsi, tous les critères et données permettant la mise en oeuvre de l'une au moins des étapes d'authentification, de comparaison ou de vérification sont ici directement à disposition des premiers et deuxièmes moyens d'authentification et/ou de comparaison et/ou des moyens de vérification, sans communication vers l'extérieur.

Corrélativement, selon un deuxième aspect, l'invention concerne un dispositif de transfert appartenant à un système de contrôle d'accès comprenant :
- un support au moins défini par un identifiant unique préalablement signé et authentifiable, ledit support étant configuré pour supporter au moins une donnée de demande d'accès signée ;
- un système de gestion de données comprenant plusieurs enregistrements, chaque enregistrement représentant une donnée spécifique, et chaque donnée spécifique étant fonction d'un des paramètres suivants :
   ∘ un identifiant d'un utilisateur autorisé ;
   ∘ une information d'une période autorisée ;
   ∘ une information d'une plage horaire autorisée ;
   ∘ une information d'une zone géographique autorisée ;
   ∘ une information d'une activité dudit utilisateur autorisé ;
- un dispositif de génération d'une donnée de demande d'accès à signer à partir de plusieurs desdites données spécifiques et de l'identifiant unique du support,
- un dispositif de lecture configuré pour lire une donnée de demande d'accès signée dudit support et pour transmettre un signal d'autorisation d'accès à un dispositif de verrouillage;
- des premiers moyens d'authentification connectés audit dispositif de lecture et configurés pour authentifier ladite donnée de demande d'accès signée ;
- des deuxièmes moyens d'authentification connectés audit dispositif de lecture et configurés pour authentifier le support;
- des moyens de vérification connectés audit dispositif de lecture et configurés pour vérifier la donnée signature de ladite donnée de demande d'accès signée ;
- des premiers moyens de comparaison connectés audit dispositif de lecture et configurés pour comparer l'identifiant unique du support avec ladite deuxième donnée de ladite donnée de demande d'accès signée ;
- des deuxièmes moyens de comparaison connectés audit dispositif de lecture et à une base référentielle de données dans lesquels sont inscrits un ou plusieurs sous-ensembles de données spécifiques, chaque sous-ensemble étant représentatif d'une autorisation d'accès prédéfinie qui est fonction de plusieurs desdits paramètres, lesdits deuxièmes moyens de comparaison étant configurés pour comparer la première donnée de ladite donnée de demande d'accès signée avec lesdits sous-ensembles de données ;
ledit dispositif de transfert étant connecté au système de gestion et comprenant :
- des moyens de lecture de l'identifiant unique dudit support,
- des moyens de réception de la donnée de demande d'accès à signer,
- des moyens de signature de la donnée de demande d'accès à signer pour obtenir une donnée de demande d'accès signée comprenant une première donnée représentative des plusieurs desdites données spécifiques, une deuxième donnée relative audit identifiant unique du support, et une donnée signature,
- des moyens d'émission de ladite donnée de demande d'accès signée vers le support.

Corrélativement, selon un troisième aspect, l'invention concerne le support au moins défini par un identifiant unique préalablement signé et authentifiable et appartenant à un système de contrôle d'accès comprenant :
- un système de gestion de données comprenant plusieurs enregistrements, chaque enregistrement représentant une donnée spécifique, et chaque donnée spécifique étant fonction d'un des paramètres suivants :
   ∘ un identifiant d'un utilisateur autorisé ;
   ∘ une information d'une période autorisée ;
   ∘ une information d'une plage horaire autorisée ;
   ∘ une information d'une zone géographique autorisée ;
   ∘ une information d'une activité dudit utilisateur autorisé ;
- un dispositif de génération d'une donnée de demande d'accès à signer à partir de plusieurs desdites données spécifiques et de l'identifiant unique du support,
- des moyens de lecture de l'identifiant unique dudit support destinataire de la donnée de demande d'accès signée, lesdits moyens de lecture étant connectés audit dispositif de génération,
- des moyens de signature de ladite donnée de demande d'accès à signer pour obtenir une donnée de demande d'accès signée comprenant une première donnée représentative des plusieurs desdites données spécifiques, une deuxième donnée relative audit identifiant unique du support, et une donnée signature,
- un dispositif de transfert configuré pour transférer ladite donnée de demande d'accès signée audit support, ledit dispositif de transfert étant connecté auxdits moyens de signature et audit système de gestion ;
- un dispositif de lecture configuré pour lire ladite donnée de demande d'accès signée dudit support et pour transmettre un signal d'autorisation d'accès à un dispositif de verrouillage;
- des premiers moyens d'authentification connectés audit dispositif de lecture et configurés pour authentifier ladite donnée de demande d'accès signée ;
- des deuxièmes moyens d'authentification connectés audit dispositif de lecture et configurés pour authentifier le support;
- des moyens de vérification connectés audit dispositif de lecture et configurés pour vérifier la donnée signature de ladite donnée de demande d'accès signée ;
- des premiers moyens de comparaison connectés audit dispositif de lecture et configurés pour comparer l'identifiant unique du support avec ladite deuxième donnée de ladite donnée de demande d'accès signée ;
- des deuxièmes moyens de comparaison connectés audit dispositif de lecture et à une base référentielle de données dans lesquels sont inscrits un ou plusieurs sous-ensembles de données spécifiques, chaque sous-ensemble étant représentatif d'une autorisation d'accès prédéfinie qui est fonction de plusieurs desdits paramètres, lesdits deuxièmes moyens de comparaison étant configurés pour comparer la première donnée de ladite donnée de demande d'accès signée avec lesdits sous-ensembles de données ;
ledit support comprenant :
- des moyens de réception d'au moins une donnée de demande d'accès signée ;
- des moyens de support de ladite donnée de demande d'accès signée ;
- des moyens d'envoi de ladite donnée de demande d'accès signée.

Corrélativement, selon un quatrième aspect, l'invention concerne un dispositif de lecture appartenant à un système de contrôle d'accès comprenant
- un support au moins défini par un identifiant unique préalablement signé et authentifiable, ledit support étant configuré pour supporter au moins une donnée de demande d'accès signée ;
- un système de gestion de données comprenant plusieurs enregistrements, chaque enregistrement représentant une donnée spécifique, et chaque donnée spécifique étant fonction d'un des paramètres suivants :
   ∘ un identifiant d'un utilisateur autorisé ;
   ∘ une information d'une période autorisée ;
   ∘ une information d'une plage horaire autorisée ;
   ∘ une information d'une zone géographique autorisée ;
   ∘ une information d'une activité dudit utilisateur autorisé ;
- un dispositif de génération d'une donnée de demande d'accès à signer à partir de plusieurs desdites données spécifiques et de l'identifiant unique du support,
- des moyens de lecture de l'identifiant unique dudit support destinataire de la donnée de demande d'accès signée, lesdits moyens de lecture étant connectés audit dispositif de génération,
- des moyens de signature de ladite donnée de demande d'accès à signer pour obtenir une donnée de demande d'accès signée comprenant une première donnée représentative des plusieurs desdites données spécifiques, une deuxième donnée relative audit identifiant unique du support, et une donnée signature,
- un dispositif de transfert configuré pour transférer ladite donnée de demande d'accès signée audit support, ledit dispositif de transfert étant connecté auxdits moyens de signature et audit système de gestion ;
ledit dispositif de lecture comprenant :
- des moyens de lecture de ladite donnée de demande d'accès signée,
- des premiers moyens d'authentification configurés pour authentifier ladite donnée de demande d'accès signée ;
- des deuxièmes moyens d'authentification configurés pour authentifier le support;
- des moyens de vérification configurés pour vérifier la donnée signature de ladite donnée de demande d'accès signée ;
- des premiers moyens de comparaison configurés pour comparer l'identifiant unique du support avec ladite deuxième donnée de ladite donnée de demande d'accès signée ;
- des deuxièmes moyens de comparaison connectés à une base référentielle de données dans lesquels sont inscrits un ou plusieurs sous-ensembles de données spécifiques, chaque sous-ensemble étant représentatif d'une autorisation d'accès prédéfinie qui est fonction de plusieurs desdits paramètres, lesdits deuxièmes moyens de comparaison étant configurés pour comparer la première donnée de ladite donnée de demande d'accès signée avec lesdits sous-ensembles de données ;
- des moyens de transmission d'un signal d'autorisation d'accès à un dispositif de verrouillage.

Selon un cinquième aspect, l'invention concerne un système de contrôle d'accès comprenant un dispositif de transfert tel que décrit ci-avant, un support tel que décrit ci-avant et un dispositif de lecture tel que décrit ci-avant.

De préférence, le système de contrôle comprend en outre des moyens de chiffrement de ladite donnée de demande d'accès à signer ou de ladite donnée de demande d'accès signée.

De préférence, dans le système de contrôle d'accès :
- ledit dispositif de transfert est en outre configuré pour transférer ladite donnée de demande d'accès signée chiffrée audit support, et de préférence pour déchiffrer ladite donnée de demande d'accès signée chiffrée supporté par ledit support, et
- ledit dispositif de lecture est en outre configuré pour lire et déchiffrer ladite donnée de demande d'accès signée chiffrée.

L'invention sera mieux comprise à la lecture de la description qui suit, faite uniquement à titre d'exemple, et en référence aux figures en annexe dans lesquelles :
[Fig 1] la figure 1 représente schématiquement un système selon différents modes de réalisation de l'invention ;
[Fig 2] la figure 2 représente schématiquement un mécanisme à clés asymétriques mise en oeuvre entre un dispositif de lecture et un support selon différents modes de réalisation de l'invention ;
[Fig 3] la figure 3 représente schématiquement un mécanisme à clés asymétriques mise en oeuvre entre un dispositif de lecture et un support selon différents modes de réalisation de l'invention.

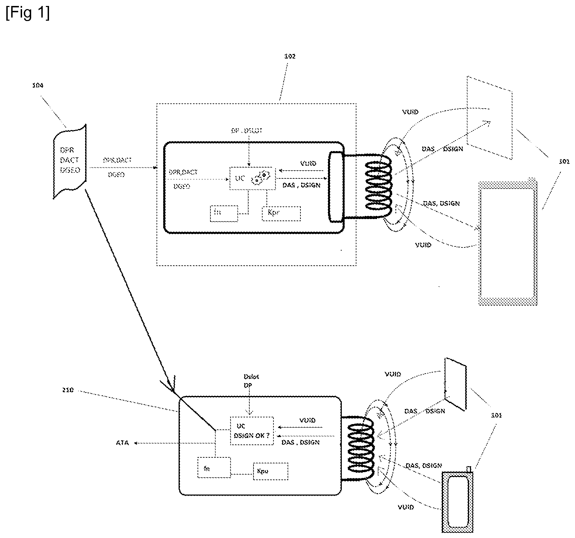

Dans la figure 1, le système de contrôle d'accès selon un mode particulier selon l'invention, comprend plusieurs supports 101, chacun étant défini par un identifiant unique, par exemple un identifiant unique vigik^{®} (communément désigné par l'acronyme VUID), configurés pour supporter au moins une donnée de demande d'accès signée.

Ce système de contrôle d'accès comprend en outre un système de gestion de données 104 comprenant des sous-enregistrements, chaque sous-enregistrement représentant des données spécifiques telles que des données prestataires DPR particulière définissant un prestataire (une société par exemple) par exemple, des zones géographiques DGEO dans lesquelles est présent le prestataire, et activités DACT définissant les activités du prestataire. En outre, le système gestion comprend également des données représentatives des paramètres suivants :
- une information d'une période autorisée DP ; et
- une information d'une plage horaire autorisée DSLOT.

De cette façon, à chaque sous-enregistrement peut être associés une information d'une période autorisée DP et une information d'une plage horaire autorisée DSLOT.

Ce système de contrôle d'accès comprend en outre plusieurs dispositifs de génération d'une donnée de demande d'accès à signer DAS à partir d'un des sous-enregistrements, des données spécifiques DP et DSLOT et du VUID du support sur lequel on souhaite transférer la donnée de demande d'accès à signer DAS.

La donnée de demande d'accès à signer DAS est donc générée à partir d'un des sous-ensembles, des paramètres DP et DSLOT et de l'identifiant unique VUID d'un des supports 101 lu par des moyens de lecture auxquels sont connectés le système de gestion et chacun des dispositifs de génération. Chaque dispositif de génération peut être situé dans les locaux d'un prestataire de service accrédité ou autorisé de sorte à faciliter la génération avant le transfert des données de demande d'accès.

Ce système de contrôle d'accès comprend en outre un dispositif de transfert 102 connecté au système de gestion et comprenant des moyens de lecture de l'identifiant unique dudit support, des moyens de réception de la donnée de demande d'accès à signer et générée par le dispositif de génération, des moyens de signature de la donnée de demande d'accès à signer pour obtenir une donnée de demande d'accès signée comprenant une première donnée représentative de ladite une ou plusieurs desdites données spécifiques, une deuxième donnée relative audit identifiant unique du support, et une donnée signature, et des moyens d'émission de ladite donnée de demande d'accès signée vers le support. Ainsi, ce dispositif de transfert 102 est configuré pour transférer la donnée de demande d'accès signée au support 101 correspondant au VUID à partir duquel a été générée la donnée de demande d'accès.

Les moyens de signature de la donnée de demande d'accès à signer permettent d'obtenir, une fois celle-ci signée, une donnée de demande d'accès signée comprenant une première donnée représentative des paramètres DP, DPR, DACT, DGEO et DSLOT et comprenant une deuxième donnée relative au VUID du support 101, et une donnée signature DSIGN de sorte à certifier la donnée de demande d'accès.

Ici, la donnée signature DSIGN de la demande d'accès à signer DAS par les moyens de signature, peut donc s'écrire DSIGN = fn(Kpr,VUID,DPR,DP,DSLOTS,DACT,DGEO). Afin que la donnée signature puisse être vérifiée par chacun les moyens de vérification susceptibles entre autres d'autoriser l'accès, les moyens de vérification disposent de moyens cryptographiques adéquats. Ces moyens cryptographiques se décomposent en un algorithme de vérification fn et une clé de vérification Kpu qui selon que l'algorithme de la donnée signature est à clé secrète ou à clé publique est égale à la clé secrète ou publique des moyens de signature.

Les moyens de signature peuvent être configurés pour modifier, après une période prédéfinie qui peut être une période d'utilisation du support 101, sa donnée signature de sorte que le certificat de la donnée de demande d'accès initialement signée ne soit plus valide.

Ainsi, chaque support 101 comprend des moyens de réception de la donnée de demande d'accès signée, des moyens de support de la donnée de demande d'accès signée, et des moyens d'envoi de la donnée de demande d'accès signée.

Ce système de contrôle d'accès comprend en outre plusieurs dispositifs de lecture 210 configurés pour lire la donnée de demande d'accès signée émise par un support 101 parmi lesdits supports 101 et pour transmettre un signal d'autorisation d'accès à des dispositifs de verrouillage une fois que la donnée de demande d'accès signée et son support 101 ont été authentifiés, vérifiés et comparés.

Chaque dispositif de lecture 210 est situé dans une zone géographique couverte par au moins une zone géographique DGEO d'au moins un des supports.

Chaque dispositif de lecture 210 est avantageusement doté d'une horloge interne qui vérifie que l'information date/heure courante de présentation du support 101 se trouve bien à l'intérieur de la plage du support DP et de la plage horaire autorisée DSLOT du contrôle d'accès puis, authentifie le support et la donnée de demande d'accès à l'aide de moyens d'authentification, vérifie la signature à l'aide de moyens de vérification qui comprend par exemple une clé de vérification, puis compare le VUID du support lu avec le VUID contenu dans la donnée de demande d'accès signée à partir duquel cette dernière a été générée et compare également la première donnée de la donnée de demande d'accès signée avec des sous-ensembles inscrits dans une base référentielle de données connectée au dispositif de lecture. Si les authentifications, vérification et comparaisons sont satisfaites, le dispositif de lecture 210 génère et transmet un signal d'autorisation d'accès ATA au dispositif de verrouillage (ou plusieurs dispositif de verrouillage) auquel il est connecté.

Pour ce faire, le dispositif de lecture 210 est connecté à :
- des premiers moyens d'authentification connectés configurés pour authentifier la donnée de demande d'accès signée ; à
- des deuxièmes moyens d'authentification configurés pour authentifier le support 101; à
- des moyens de vérification pour vérifier la donnée signature de la donnée de demande d'accès signée ; à
- des premiers moyens de comparaison pour comparer l'identifiant unique du support 101 avec la deuxième donnée de ladite donnée de demande d'accès signée ; et à
- des deuxièmes moyens de comparaison connectés à une base référentielle de données dans lesquels sont inscrits un ou plusieurs sous-ensembles de données spécifiques, chaque sous-ensemble étant représentatif d'une autorisation d'accès prédéfinie qui est fonction de plusieurs des paramètres, les deuxièmes moyens de comparaison étant configurés pour comparer la première donnée de la donnée de demande d'accès signée avec les sous-ensembles de données.

Il est à noter que la donnée de demande d'accès signée peut s'apparenter à un certificat cert(c)) généré par une autorité de certification (CA) (22) à l'aide entre autres des dispositifs de génération et transfert 102 ainsi que des moyens de signatures.

Ainsi dans le système selon l'invention, le support 101 de données, qu'il soit sous forme de carte ou de téléphone mobile, peut alors avoir une fonction de clé électronique apte à déverrouiller les dispositifs de verrouillage implantés sur une zone géographique particulière définie par DGEO, pour exercer une activité DACT à condition d'être un prestataire de service accrédité et/ou exerçant une activité autorisée DPR inscrite dans le système de gestion de données 104 et ceci sur dans une plage horaire donnée DSLOT à une date prévue DP.

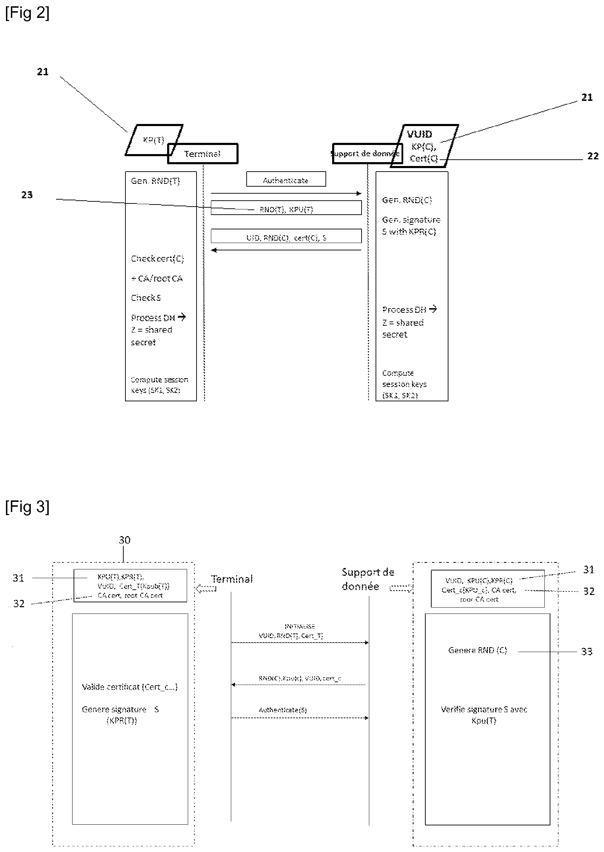

Pour ce faire, le mécanisme mis en jeu peut être celui indiqué dans la figure 2 [Fig 2], qui illustre un mécanisme à clés asymétriques, dans lequel il n'est pas nécessaire de partager de données secrètes, ni de partager une clé identique entre le dispositif de lecture 210 et le support 101 supportant le certificat cert(c) généré par une autorité de certification (CA) (22). Le système de contrôle d'accès est alors ici configuré pour que le support 101 supporte des informations complémentaires en sus du certificat cert(c) (ou donnée de demande d'accès signée). Dans ce cas, le dispositif de lecture 210, seul ou associé à d'autres moyens techniques, est en outre apte à évaluer, analyser, contrôler ces informations complémentaires.

En particulier, le support 101 peut en outre être configuré pour supporter une bi-clé et le dispositif de lecture 210, qui peut être désigné par le terme terminal, sont configurés pour recevoir en outre tous les deux une bi-clé ou « keypair » (KP) (21), peut également être connecté à un moyen défini par une autre bi-clé. Chacune de ces bi-clés est composée d'une partie publique (KPU) et d'une partie privée (KPR). La partie privée du support 101 ne devra jamais être divulguée sous peine de clonage possible. Le dispositif de lecture 210 pourra utiliser une bi-clé statique ou éphémère et est configuré en outre pour générer un nombre aléatoire appelé « random » RND(T) 23. De plus, le support, mise à part le certificat cert(c), supporte en outre, une unité de traitement configurée pour générer un nombre aléatoire « random » RND(C) et une signature supplémentaire S à partir de sa clé privée KPR(C) et des deux nombres aléatoires RND (C) et RND(T).

Ainsi, le dispositif de lecture 210 tire le nombre aléatoire appelé « random » RND(T) 23 et le fournit au support 101 en même temps que sa clé publique KPU(T). Le support 101, à son tour, tire le nombre aléatoire « random » RND(C) et génère la signature supplémentaire S. Le support 101 retourne au dispositif de lecture 210 son identifiant VUID, le nombre aléatoire RND(C), le certificat cert(c) et la signature supplémentaire S.

Le dispositif de lecture 210 est alors en mesure de vérifier la validité du certificat cert(C) et de vérifier la signature supplémentaire S avec la clé publique du support 101 de donnée KPU(C) contenue dans le certificat cert(C). Chaque entité va alors calculer un secret partagé, ou résultat, Z avec un algorithme type Diffie-Hellman en utilisant les deux nombres aléatoires RAND (C) et RAND (T), la clé publique de l'autre entité et sa propre clé privée.

Le résultat Z sera ensuite diversifié en clés de session SK1 et SK2 à partir d'une fonction de dérivation f'. Ces clés serviront à chiffrer et à signer les futurs échanges.

Le support 101 s'est bien authentifié auprès du dispositif de lecture 210 en prouvant sa connaissance de la clé privée KPR(C) associée au certificat cert(c), lui-même bien signé par une autorité de certification via les moyens de signature.

La clé privée KPR(C) devra être protégée par le support 101 afin qu'elle ne puisse jamais être extraite. Cela peut être à cette condition que le clonage pourra être évité. La bi-clé du dispositif de lecture 210 pourra, elle, être générée soit à l'installation, soit au démarrage, soit à chaque transaction (bi-clé éphémère) en fonction des performances attendues.

Ce mécanisme peut également avoir lieu entre le support 101 et le dispositif de transfert 102 lorsque l'on souhaite par exemple transférer une nouvelle donnée de demande d'accès signée dans le support 101.

Les moyens de vérification du dispositif de lecture 210 sont de préférence, configurés pour recevoir également les certificats des autorités de certification (CA) ainsi que le certificat de l'autorité racine (root CA). Les certificats devront pouvoir être mis à jour et des listes de révocation devront être gérées, comme pour tout systèmes basés sur une solution à clé publique dite PKI.

Dans une variante, la donnée signature obtenue par les moyens de signature peut être obtenue au moyen d'un algorithme de production à clé publique. Par exemple « Elliptic curve digital signature algorithm » dit ECDSA utilisant une taille de clé d'au moins 192 bits.

Par ailleurs, dans une variante, le système comprend en outre des moyens de chiffrement de ladite donnée de demande d'accès à signer ou de ladite donnée de demande d'accès signée et le dispositif de transfert 102 est en outre configuré pour transférer la donnée de demande d'accès signée chiffrée au support 101, et de préférence pour déchiffrer la donnée de demande d'accès signée chiffrée supporté par ledit support 101, et le dispositif de lecture 210 est également en outre configuré pour lire et déchiffrer la donnée de demande d'accès signée chiffrée supportée par le support 101.

Par exemple, le chiffrement de la donnée de demande d'accès signée chiffrée est produit par un algorithme de type AES « Advance Encryption Standard » utilisant des clés de 256 bits.

Ainsi, sans être obligée de partager un secret entre les dispositifs de lecture 210 ou transfert, et le support 101 de données, il est possible que le support 101 soit configuré pour authentifier ces dispositifs et/ou que ces dispositifs soient configurés pour authentifier le support 101 à l'aide notamment de la mise en oeuvre
- d'une étape de transmission de données d'authentification du support vers le dispositif de lecture et/ou du support vers le dispositif de transfert et/ou du dispositif de lecture vers le support et/ou du dispositif de transfert vers le support ; et
- d'une étape de traitement, par le dispositif de lecture et/ou par le dispositif de transfert et/ou par le support 101, des données d'authentification recueillies.

La figure 3 illustre ce cas. En effet, comme indiqué dans la figure 3 [Fig 3] illustrant un schéma à clés asymétriques, il n'est pas nécessaire de partager une clé identique entre un terminal 30 qui peut être le dispositif de lecture 30 (ou le dispositif de transfert 102, et le support 101. Dans la suite, on considère que le terminal 30 est le dispositif de lecture 210. Ainsi, le support 101 et le terminal 30 reçoivent tous les deux une bi-clé ou « keypair » (KP) 31, composée d'une partie publique (KPU) et d'une partie privée (KPR). La partie privée du terminal 30 ne devra pas être divulguée afin d'éviter que des dispositifs de lecture non autorisés puissent communiquer avec le support 101. Le terminal 30 recevra l'identifiant unique (VUID) du support et le certificat cert(c) supporté par le support 101 et initialement généré par une autorité de certification (CA) (32).

Le support 101 tire un nombre aléatoire appelé « random » RND(C) (33) et le fournit au terminal 30 ainsi que son identifiant VUID et sa clé publique KPU(C). Après vérification de la chaîne de certificats, le terminal 30 génère une signature supplémentaire S avec sa clé privée KPR(T) et l'aléa en utilisant un algorithme cryptographique puis transmet cette signature supplémentaire au support 101.

Le support 101 est alors en mesure de vérifier la validité du certificat et de vérifier la signature supplémentaire S avec la clé publique du support 101 du terminal 30 KPU(T) contenue dans le certificat précédemment transféré au support 101 actuellement supporté par le support 101.

Le terminal 30 s'est bien authentifié à son tour auprès du support 101 en prouvant sa connaissance de la clé privée KPR(T) associée au certificat, lui-même signé par une autorité de certification.

La clé privée KPR(T) devra être protégée par le terminal 30 afin qu'elle ne puisse jamais être extraite.

En particulier, la signature supplémentaire du terminal 30 peut être obtenue au moyen d'un algorithme de production à clé publique. Par exemple « RSA » utilisant une taille de clé d'au moins 1024 bits. Après cette authentification du terminal 30, le certificat équivalent à la donnée de demande d'accès signée est accessible en lecture depuis le support 101 de façon chiffrée. Le chiffrement des données de demande d'accès est produit par un algorithme de type AES « Advance Encryption Standard » utilisant des clés de 256 bits.

Les deux phases d'authentification (celle du support par le dispositif de lecture et celle du dispositif de lecture par le support) constituent une authentification mutuelle des deux entités : le support 101 et le terminal 30.

Ce mécanisme peut également avoir lieu entre le support 101 et le dispositif de transfert 102, qui est alors considéré comme étant le terminal 30, lorsque l'on souhaite par exemple transférer une nouvelle donnée de demande d'accès signée dans le support 101.

Ainsi, l'authentification du dispositif de lecture 210, ou du dispositif de transfert 102 par le support 101, utilise également un principe d'authentification sans être obligée de partager un secret.

Dans une variante, le support 101 est en outre configuré pour supporter des données de modification de la base référentielle de données connecté au dispositif de lecture 210. Le support 101 est dans ce cas configuré pour transporter des données de mise à jour du dispositif de lecture 210, et pour lui transmettre lors de leur lecture. Ainsi, le support 101 peut supporter des données permettant par exemple la mise à jour des conditions d'authentification, de vérification ou encore de comparaison relative au dispositif de lecture 210. Ce peut être également le cas par exemple pour tout autre élément destiné à être pollinisé sur l'ensemble du système de contrôle d'accès.

Il est à noter que lorsque sont réalisées les conditions de demande d'accès lues sur les supports 101 via la donnée de demande d'accès signée par le dispositif de lecture 210 ou par d'autres terminaux habilités tels que le dispositif de transfert 102, de nouveaux paramètres, destinés à d'optionnelles applications autres que le contrôle d'accès, c'est-à-dire autres que l'authentification et l'émission d'un signal d'autorisation d'accès pourront être évalués. Ces données supplémentaires indépendantes de l'application principale du contrôle d'accès bénéficieront ainsi du système d'authentification mis en place, de la sécurité apportée par les supports 101 et de la disponibilité de la base référentielle de données ainsi que l'architecture globale du système.

Dans un mode de réalisation de l'invention, les dispositifs qui constituent le système, sont totalement indépendant les uns des autres. Aussi, il n'existe pas de lien de dépendance entre le dispositif de lecture 210 et le dispositif de transfert 102 de même que le support 101 fonctionne également sur tous les dispositifs de lecture, lorsque le système en comprend plusieurs, sans qu'ils n'aient de liens ou de dépendances entre eux. Le système, dans cette variante, ne nécessite pas d'être connecté dans sa globalité pour fonctionner lors des étapes de transfert et de transmission du signal d'autorisation d'accès par exemple. Il pourra se connecter de façon autonome et indépendante de ces étapes. Des données de demandes d'accès signées supportées par les supports 101 par suite à l'étape de transfert via n'importe quel dispositif de transfert 102 pourront être acceptées sur n'importe quel dispositif de lecture 210 participant au système. C'est-à-dire que les dispositifs de lecture, lorsque le système en comprend plusieurs, n'ont aucun lien de dépendance avec les dispositifs de transferts notamment lorsque le système en comprend plusieurs.

## Revendications

1. Procédé de contrôle d'accès dans un système de contrôle d'accès comprenant :
- un support au moins défini par un identifiant unique préalablement signé et authentifiable, ledit support étant configuré pour supporter au moins une donnée de demande d'accès signée ;
- un système de gestion de données comprenant plusieurs enregistrements, chaque enregistrement représentant une donnée spécifique, et chaque donnée spécifique étant fonction d'un des paramètres suivants :
▪ un identifiant d'un utilisateur autorisé ;
▪ une information d'une période autorisée ;
▪ une information d'une plage horaire autorisée ;
▪ une information d'une zone géographique autorisée ;
▪ une information d'une activité dudit utilisateur autorisé ;
- un dispositif de génération d'une donnée de demande d'accès à signer à partir de plusieurs desdites données spécifiques et de l'identifiant unique du support,
- des moyens de lecture de l'identifiant unique dudit support destinataire de la donnée de demande d'accès signée, lesdits moyens de lectures étant connectés audit dispositif de génération,
- des moyens de signature de ladite donnée de demande d'accès à signer pour obtenir une donnée de demande d'accès signée comprenant une première donnée représentative des plusieurs desdites données spécifiques, une deuxième donnée relative audit identifiant unique du support, et une donnée signature,
- un dispositif de transfert configuré pour transférer ladite donnée de demande d'accès signée audit support, ledit dispositif de transfert étant connecté auxdits moyens de signature et audit système de gestion ;
- un dispositif de lecture configuré pour lire ladite donnée de demande d'accès signée dudit support et pour transmettre un signal d'autorisation d'accès à un dispositif de verrouillage;
- des premiers moyens d'authentification connectés audit dispositif de lecture et configurés pour authentifier ladite donnée de demande d'accès signée ;
- des deuxièmes moyens d'authentification connectés audit dispositif de lecture et configurés pour authentifier le support;
- des moyens de vérification connectés audit dispositif de lecture et configurés pour vérifier la donnée signature de ladite donnée de demande d'accès signée ;
- des premiers moyens de comparaison connectés audit dispositif de lecture et configurés pour comparer l'identifiant unique du support avec ladite deuxième donnée de ladite donnée de demande d'accès signée ;
- des deuxièmes moyens de comparaison connectés audit dispositif de lecture et à une base référentielle de données dans lesquels sont inscrits un ou plusieurs sous-ensembles de données spécifiques, chaque sous-ensemble étant représentatif d'une autorisation d'accès prédéfinie qui est fonction de plusieurs desdits paramètres, lesdits deuxièmes moyens de comparaison étant configurés pour comparer la première donnée de ladite donnée de demande d'accès signée avec lesdits sous-ensembles de données ;
ledit procédé de contrôle d'accès étant exécuté par ledit système de contrôle d'accès et comprenant :
- une étape d'enregistrement desdites données spécifiques dans ledit système de gestion de données ;
- une étape de fourniture du support défini par un identifiant unique préalablement signé et authentifiable,
- une étape, via lesdits moyens de lecture, de lecture de l'identifiant unique dudit support,
- une étape, via ledit dispositif de génération, de génération de ladite donnée de demande d'accès à signer ; ladite étape de génération de ladite donnée de demande d'accès à signer étant réalisée après ladite étape de lecture de l'identifiant unique préalablement signé dudit support ;
- une étape, via lesdits moyens de signature, de signature de ladite donnée de demande d'accès à signer et de l'identifiant unique du support pour obtenir ladite donnée de demande d'accès signée ;
- une étape de transfert de ladite donnée de demande d'accès signée depuis ledit dispositif de transfert vers ledit support défini par l'identifiant unique de la deuxième donnée de ladite donnée de demande d'accès signée ;
- une étape d'inscription dans la base référentielle de données desdits un ou plusieurs sous-ensembles de données spécifiques,
- une étape, via ledit dispositif de lecture, de lecture de ladite donnée de demande d'accès signée supportée par ledit support ;
- une étape d'authentification, via lesdits deuxièmes moyens d'authentification, du support,
- une étape d'authentification, via lesdits premiers moyens d'authentification, de ladite donnée de demande d'accès signée et une étape de vérification, via lesdits moyens de vérification, de la donnée signature de ladite donnée de demande d'accès signée, et
- une étape, via lesdits premiers moyens de comparaison, de comparaison de l'identifiant unique définissant le support avec celui de la deuxième donnée de ladite donnée de demande d'accès signée,
- une étape, via lesdits deuxièmes moyens de comparaison, de comparaison de la première donnée de ladite donnée de demande d'accès signée avec lesdits sous-ensembles inscrits dans la base référentielle de données :
- une étape de transmission dudit signal d'autorisation d'accès depuis ledit dispositif de lecture vers ledit dispositif de verrouillage.

2. Procédé de contrôle d'accès selon la revendication 1, **caractérisé en ce qu'**une nouvelle donnée de demande d'accès signée ou à signer est signée par les moyens de signature ou générée par le dispositif de génération à la demande de l'utilisateur du support pour chaque nouvelle période d'utilisation dudit support.

3. Procédé de contrôle d'accès selon l'une des revendications 1 ou 2, lorsque ledit support est configuré pour en outre supporter des données d'authentification et lorsque le dispositif de lecture est configuré pour recevoir les données d'authentification en provenance dudit support et est configuré pour les transmettre auxdits deuxièmes moyens d'authentification qui sont configurés pour recevoir les données d'authentification via ledit dispositif de lecture, ledit procédé comprend en outre :
- une étape de transmission de données d'authentification du support vers ledit dispositif de lecture ; et
- une étape de traitement, par ledit dispositif de lecture, desdites données d'authentification en provenance dudit support.

4. Procédé de contrôle d'accès selon l'une des revendications 1 à 3, lorsque ledit support est configuré pour en outre supporter des données d'authentification, lorsque le dispositif de transfert est en outre connecté à des troisièmes moyens d'authentification configurés pour authentifier le support destinataire de la donnée de demande d'accès signée via les données d'authentification, lorsque le dispositif de transfert est en outre configuré pour recevoir des données d'authentification et les transmettre auxdits troisièmes moyens d'authentification qui sont configurés pour recevoir les données d'authentification via ledit dispositif de transfert,
ledit procédé comprend en outre ;
- une étape de transmission de données d'authentification du support vers le dispositif de transfert ; et
- une étape de traitement, par ledit dispositif de transfert, desdites données d'authentification en provenance dudit support.

5. Procédé de contrôle d'accès selon l'une des revendications 1 à 4, lorsque ledit dispositif de lecture est en outre configuré pour transmettre des données d'authentification, lorsque le support est configuré pour recevoir et traiter lesdites données d'authentification en provenance dudit dispositif de lecture,
ledit procédé comprend en outre :
- une étape de transmission de données d'authentification du dispositif de lecture vers ledit support ;
- un étape de traitement, par ledit support, desdites données d'authentification en provenance dudit dispositif de lecture.

6. Procédé de contrôle d'accès selon l'une des revendications 1 à 5, lorsque ledit dispositif de transfert est en outre configuré pour transmettre des données d'authentification, lorsque le support est configuré pour recevoir et traiter des données d'authentification en provenance dudit dispositif de transfert,
ledit procédé comprend en outre :
- une étape de transmission de données d'authentification du dispositif de transfert vers ledit support,
- un étape de traitement, par ledit support, desdites données d'authentification en provenance dudit dispositif de transfert .

7. Procédé de contrôle d'accès selon l'une des revendications 1 à 6 lorsque ledit système de contrôle d'accès comprend en outre des moyens de chiffrement de ladite donnée de demande d'accès à signer ou de ladite donnée de demande d'accès signée,
- ledit dispositif de transfert est en outre configuré pour transférer ladite donnée de demande d'accès signée chiffrée audit support,
- ledit dispositif de lecture est en outre configuré pour lire et déchiffrer ladite donnée de demande d'accès signée chiffrée ,
ledit procédé comprend en outre :
- une étape de chiffrement de ladite donnée de demande d'accès à signer ou de ladite donnée de demande d'accès signée, et
- une étape de déchiffrement par ledit dispositif de lecture de ladite donnée de demande d'accès chiffrée et signée.

8. Procédé de contrôle d'accès selon la revendication 7, lorsque :
- ledit dispositif de transfert est en outre configuré pour déchiffrer ladite donnée de demande d'accès signée chiffrée supportée par ledit support,
ledit procédé comprend en outre :
- une étape supplémentaire de déchiffrement de ladite donnée de demande d'accès signée chiffrée supportée par ledit support, et
- une étape de transfert d'une nouvelle donnée de demande d'accès signée chiffrée vers ledit support pour remplacer ladite donnée de demande d'accès signée chiffrée supportée par ledit support.

9. Procédé de contrôle d'accès selon l'une des revendications 1 à 8, lorsque ledit support est en outre configuré pour supporter des données de modification de ladite base référentielle de données,
ledit procédé comprend en outre :
- une étape de transfert desdites données de modification dudit support vers ledit dispositif de lecture, et
- une étape de modification de ladite base référentielle de données par modification ou suppression d'un desdits sous-ensembles, ou par ajout d'un sous-ensemble supplémentaire.

10. Procédé de contrôle d'accès selon l'une des revendications 1, à 9, lorsque ledit support est configuré pour en outre supporter des données supplémentaires, lorsque le dispositif de lecture et/ou le dispositif de transfert sont configurés pour traiter lesdites données supplémentaires,
le procédé comprend en outre :
- une étape de transfert desdites données supplémentaires du support vers le dispositif de lecture et/ou le dispositif de transfert, et
- une étape de traitement desdites données supplémentaires par ledit dispositif de lecture et/ou par ledit dispositif de transfert.

11. Procédé de contrôle d'accès selon l'une des revendications 1 à 10, selon lequel l'une ou plusieurs des étapes d'authentification et/ou l'une ou plusieurs des étapes de comparaison et/ou l'étape de vérification sont mises en oeuvre sans que les moyens employés dans ces étapes communiquent avec un quelconque élément extérieur audit système.

12. Dispositif de transfert appartenant à un système de contrôle d'accès comprenant :
- un support au moins défini par un identifiant unique préalablement signé et authentifiable, ledit support étant configuré pour supporter au moins une donnée de demande d'accès signée ;
- un système de gestion de données comprenant plusieurs enregistrements, chaque enregistrement représentant une donnée spécifique, et chaque donnée spécifique étant fonction d'un des paramètres suivants :
▪ un identifiant d'un utilisateur autorisé ;
▪ une information d'une période autorisée ;
▪ une information d'une plage horaire autorisée ;
▪ une information d'une zone géographique autorisée ;
▪ une information d'une activité dudit utilisateur autorisé ;
- un dispositif de génération d'une donnée de demande d'accès à signer à partir de plusieurs desdites données spécifiques et de l'identifiant unique du support,
- un dispositif de lecture configuré pour lire une donnée de demande d'accès signée dudit support et pour transmettre un signal d'autorisation d'accès à un dispositif de verrouillage;
- des premiers moyens d'authentification connectés audit dispositif de lecture et configurés pour authentifier ladite donnée de demande d'accès signée ;
- des deuxièmes moyens d'authentification connectés audit dispositif de lecture et configurés pour authentifier le support;
- des moyens de vérification connectés audit dispositif de lecture et configurés pour vérifier la donnée signature de ladite donnée de demande d'accès signée ;
- des premiers moyens de comparaison connectés audit dispositif de lecture et configurés pour comparer l'identifiant unique du support avec ladite deuxième donnée de ladite donnée de demande d'accès signée ;
- des deuxièmes moyens de comparaison connectés audit dispositif de lecture et à une base référentielle de données dans lesquels sont inscrits un ou plusieurs sous-ensembles de données spécifiques, chaque sous-ensemble étant représentatif d'une autorisation d'accès prédéfinie qui est fonction de plusieurs desdits paramètres, lesdits deuxièmes moyens de comparaison étant configurés pour comparer la première donnée de ladite donnée de demande d'accès signée avec lesdits sous-ensembles de données ;
ledit dispositif de transfert étant connecté au système de gestion et comprenant :
- des moyens de lecture de l'identifiant unique dudit support,
- des moyens de réception de la donnée de demande d'accès à signer,
- des moyens de signature de la donnée de demande d'accès à signer pour obtenir une donnée de demande d'accès signée comprenant une première donnée représentative des plusieurs desdites données spécifiques, une deuxième donnée relative audit identifiant unique du support, et une donnée signature,
- des moyens d'émission de ladite donnée de demande d'accès signée vers le support.

13. Support au moins défini par un identifiant unique préalablement signé et authentifiable et appartenant à un système de contrôle d'accès comprenant :
- un système de gestion de données comprenant plusieurs enregistrements, chaque enregistrement représentant une donnée spécifique, et chaque donnée spécifique étant fonction d'un des paramètres suivants :
▪ un identifiant d'un utilisateur autorisé ;
▪ une information d'une période autorisée ;
▪ une information d'une plage horaire autorisée ;
▪ une information d'une zone géographique autorisée ;
▪ une information d'une activité dudit utilisateur autorisé ;
- un dispositif de génération d'une donnée de demande d'accès à signer à partir de plusieurs desdites données spécifiques et de l'identifiant unique du support,
- des moyens de lecture de l'identifiant unique dudit support destinataire de la donnée de demande d'accès signée, lesdits moyens de lecture étant connectés audit dispositif de génération,
- des moyens de signature de ladite donnée de demande d'accès à signer pour obtenir une donnée de demande d'accès signée comprenant une première donnée représentative des plusieurs desdites données spécifiques, une deuxième donnée relative audit identifiant unique du support, et une donnée signature,
- un dispositif de transfert configuré pour transférer ladite donnée de demande d'accès signée audit support, ledit dispositif de transfert étant connecté auxdits moyens de signature et audit système de gestion ;
- un dispositif de lecture configuré pour lire ladite donnée de demande d'accès signée dudit support et pour transmettre un signal d'autorisation d'accès à un dispositif de verrouillage;
- des premiers moyens d'authentification connectés audit dispositif de lecture et configurés pour authentifier ladite donnée de demande d'accès signée ;
- des deuxièmes moyens d'authentification connectés audit dispositif de lecture et configurés pour authentifier le support;
- des moyens de vérification connectés audit dispositif de lecture et configurés pour vérifier la donnée signature de ladite donnée de demande d'accès signée ;
- des premiers moyens de comparaison connectés audit dispositif de lecture et configurés pour comparer l'identifiant unique du support avec ladite deuxième donnée de ladite donnée de demande d'accès signée ;
- des deuxièmes moyens de comparaison connectés audit dispositif de lecture et à une base référentielle de données dans lesquels sont inscrits un ou plusieurs sous-ensembles de données spécifiques, chaque sous-ensemble étant représentatif d'une autorisation d'accès prédéfinie qui est fonction de plusieurs desdits paramètres, lesdits deuxièmes moyens de comparaison étant configurés pour comparer la première donnée de ladite donnée de demande d'accès signée avec lesdits sous-ensembles de données ;
ledit support comprenant :
- des moyens de réception d'au moins une donnée de demande d'accès signée ;
- des moyens de support de ladite donnée de demande d'accès signée ;
- des moyens d'envoi de ladite donnée de demande d'accès signée.

14. Dispositif de lecture appartenant à un système de contrôle d'accès comprenant
- un support au moins défini par un identifiant unique préalablement signé et authentifiable, ledit support étant configuré pour supporter au moins une donnée de demande d'accès signée ;
- un système de gestion de données comprenant plusieurs enregistrements, chaque enregistrement représentant une donnée spécifique, et chaque donnée spécifique étant fonction d'un des paramètres suivants :
▪ un identifiant d'un utilisateur autorisé ;
▪ une information d'une période autorisée ;
▪ une information d'une plage horaire autorisée ;
▪ une information d'une zone géographique autorisée ;
▪ une information d'une activité dudit utilisateur autorisé ;
- un dispositif de génération d'une donnée de demande d'accès à signer à partir de plusieurs desdites données spécifiques et de l'identifiant unique du support,
- des moyens de lecture de l'identifiant unique dudit support destinataire de la donnée de demande d'accès signée, lesdits moyens de lecture étant connectés audit dispositif de génération,
- des moyens de signature de ladite donnée de demande d'accès à signer pour obtenir une donnée de demande d'accès signée comprenant une première donnée représentative des plusieurs desdites données spécifiques, une deuxième donnée relative audit identifiant unique du support, et une donnée signature,
- un dispositif de transfert configuré pour transférer ladite donnée de demande d'accès signée audit support, ledit dispositif de transfert étant connecté auxdits moyens de signature et audit système de gestion ;
ledit dispositif de lecture comprenant :
- des moyens de lecture de ladite donnée de demande d'accès signée,
- des premiers moyens d'authentification configurés pour authentifier ladite donnée de demande d'accès signée ;
- des deuxièmes moyens d'authentification configurés pour authentifier le support;
- des moyens de vérification configurés pour vérifier la donnée signature de ladite donnée de demande d'accès signée ;
- des premiers moyens de comparaison configurés pour comparer l'identifiant unique du support avec ladite deuxième donnée de ladite donnée de demande d'accès signée ;
- des deuxièmes moyens de comparaison connectés à une base référentielle de données dans lesquels sont inscrits un ou plusieurs sous-ensembles de données spécifiques, chaque sous-ensemble étant représentatif d'une autorisation d'accès prédéfinie qui est fonction de plusieurs desdits paramètres, lesdits deuxièmes moyens de comparaison étant configurés pour comparer la première donnée de ladite donnée de demande d'accès signée avec lesdits sous-ensembles de données ;
- des moyens de transmission d'un signal d'autorisation d'accès à un dispositif de verrouillage.

15. Système de contrôle d'accès comprenant un dispositif de transfert selon la revendication 12, un support selon la revendication 13 et un dispositif de lecture selon la revendication 14.

16. Système de contrôle d'accès selon la revendication 15, comprenant en outre des moyens de chiffrement de ladite donnée de demande d'accès à signer ou de ladite donnée de demande d'accès signée.

17. Système de contrôle d'accès selon la revendication 16, dans lequel :
- ledit dispositif de transfert est en outre configuré pour transférer ladite donnée de demande d'accès signée chiffrée audit support, et de préférence pour déchiffrer ladite donnée de demande d'accès signée chiffrée supporté par ledit support, et
- ledit dispositif de lecture est en outre configuré pour lire et déchiffrer ladite donnée de demande d'accès signée chiffrée.

## Patentansprüche

1. Verfahren zur Zugangskontrolle in einem Zugangskontrollsystem, umfassend:
- einen Träger, der mindestens durch eine eindeutige, zuvor signierte und authentifizierbare Kennung definiert ist, wobei der Träger dazu konfiguriert ist, mindestens ein signiertes Zugangsanforderungsdatenelement zu unterstützen;
- ein Datenverwaltungssystem, das mehrere Aufzeichnungen umfasst, wobei jede Aufzeichnung ein spezifisches Datenelement darstellt und jedes spezifische Datenelement von einem der folgenden Parameter abhängt:
▪ einer Kennung eines berechtigten Benutzers;
▪ einer Information zu einem berechtigten Zeitraum;
▪ einer Information zu einem berechtigten Zeitfenster;
▪ einer Information zu einem berechtigten geografischen Bereich;
▪ einer Information zur Aktivität des berechtigten Benutzers;
- eine Vorrichtung zum Generieren eines zu signierenden Zugangsanforderungsdatenelements aus mehreren der spezifischen Daten und der eindeutigen Kennung des Trägers,
- Mittel zum Lesen der eindeutigen Kennung des Trägers, der das signierte Zugangsanforderungsdatenelement empfängt, wobei die Lesemittel mit der Generierungsvorrichtung verbunden sind,
- Mittel zum Signieren des zu signierenden Zugangsanforderungsdatenelements, um ein signiertes Zugangsanforderungsdatenelement zu erhalten, die ein erstes Datenelement, das mehrere der spezifischen Daten darstellt, ein zweites Datenelement, das sich auf die eindeutige Kennung des Trägers bezieht, und ein Signaturdatenelement umfassen,
- eine Übertragungsvorrichtung, die dazu konfiguriert ist, das signierte Zugangsanforderungsdatenelement an den Träger zu übertragen, wobei die Übertragungsvorrichtung mit den Signaturmitteln und dem Verwaltungssystem verbunden ist;
- ein Lesevorrichtung, die dazu konfiguriert ist, das signierte Zugangsanforderungsdatenelement von dem Träger zu lesen und ein Zugangsberechtigungssignal an eine Sperrvorrichtung zu übertragen;
- erste Authentifizierungsmittel, die mit der Lesevorrichtung verbunden und dazu konfiguriert sind, das signierte Zugangsanforderungsdatenelement zu authentifizieren.
- zweite Authentifizierungsmittel, die mit der Lesevorrichtung verbunden und dazu konfiguriert sind, den Träger zu authentifizieren;
- Verifizierungsmittel, die mit der Lesevorrichtung verbunden und dazu konfiguriert sind, das Signaturdatenelement des signierten Zugangsanforderungsdatenelements zu verifizieren;
- erste Vergleichsmittel, die mit der Lesevorrichtung verbunden und dazu konfiguriert sind, die eindeutige Kennung des Trägers mit dem zweiten Datenelement des signierten Zugangsanforderungsdatenelements zu vergleichen;
- zweite Vergleichsmittel, die mit der Lesevorrichtung und einer Referenzdatenbank verbunden sind, in der eine oder mehrere spezifische Datenteilmengen registriert sind, wobei jede Teilmenge eine vordefinierte Zugangsberechtigung darstellt, die eine Funktion mehrerer der Parameter ist, wobei die zweiten Vergleichsmittel dazu konfiguriert sind, das erste Datenelement des signierten Zugangsanforderungsdatenelements mit den Datenteilmengen zu vergleichen;
wobei das Verfahren zur Zugangskontrolle durch das Zugangskontrollsystem ausgeführt wird und umfasst:
- einen Schritt zum Aufzeichnen der spezifischen Daten in dem Datenverwaltungssystem;
- einen Schritt zum Bereitstellen des Trägers, der durch eine zuvor signierte und authentifizierbare eindeutige Kennung definiert ist,
- einen Schritt zum Lesen der eindeutigen Kennung des Trägers durch die Lesemittel,
- einen Schritt zum Generieren des zu signierenden Zugangsanforderungsdatenelements durch die Generierungsvorrichtung, wobei der Schritt zum Generieren des zu signierenden Zugangsanforderungsdatenelements nach dem Schritt zum Lesen der zuvor signierten eindeutigen Kennung des Trägers ausgeführt wird;
- einen Schritt zum Signieren des zu signierenden Zugangsanforderungsdatenelements und der eindeutigen Kennung des Trägers zum Erhalten des signierten Zugangsanforderungsdatenelements durch die Signiermittel;
- einen Schritt zum Übertragen des signierten Zugangsanforderungsdatenelements von der Übertragungsvorrichtung an den Träger, der durch die eindeutige Kennung des zweiten Datenelements des signierten Zugangsanforderungsdatenelements definiert ist;
- einen Schritt zum Registrieren der einen oder mehreren spezifischen Teilmengen von Daten in der Referenzdatenbank,
- einen Schritt zum Lesen des signierten Zugangsanforderungsdatenelements, das von dem Träger unterstützt wird, durch die Lesevorrichtung;
- einen Schritt zum Authentifizieren des Trägers durch die zweiten Authentifizierungsmittel,
- einen Schritt zum Authentifizieren des signierten Zugangsanforderungsdatenelements durch die ersten Authentifizierungsmittel und einen Schritt zur Verifizieren des Signaturdatenelements des signierten Zugangsanforderungsdatenelements durch die Verifizierungsmittel, und
- einen Schritt zum Vergleichen der eindeutigen Kennung, die den Träger definiert, mit der des zweiten Datenelements des signierten Zugangsanforderungsdatenelements durch die ersten Vergleichsmittel,
- einen Schritt zum Vergleichen des ersten Datenelements des signierten Zugangsanforderungsdatenelements mit den in der Referenzdatenbank registrierten Teilmengen durch die zweiten Vergleichsmittel;
- einen Schritt zum Übertragen des Zugangsberechtigungssignals von der Lesevorrichtung an die Sperrvorrichtung.

2. Verfahren zur Zugangskontrolle nach Anspruch 1,
**dadurch gekennzeichnet, dass** eine neues signiertes oder zu signierendes Zugangsanforderungsdatenelement durch die Signaturmittel signiert oder durch die Generierungsvorrichtung auf Anforderung des Benutzers des Trägers für jeden neuen Benutzungszeitraum des Trägers generiert werden.

3. Verfahren zur Zugangskontrolle nach einem der Ansprüche 1 oder 2, wobei der Träger dazu konfiguriert ist, ferner Authentifizierungsdaten zu unterstützen, und wobei die Lesevorrichtung dazu konfiguriert ist, Authentifizierungsdaten aus dem Träger zu empfangen und dazu konfiguriert ist, an die zweiten Authentifizierungsmittel zu übertragen, die dazu konfiguriert sind, die Authentifizierungsdaten über die Lesevorrichtung zu empfangen,
das Verfahren ferner umfasst:
- einen Schritt zum Übertragen von Authentifizierungsdaten vom Träger an die Lesevorrichtung; und
- einen Schritt zum Verarbeiten der Authentifizierungsdaten aus dem Träger durch die Lesevorrichtung.

4. Verfahren zur Zugangskontrolle nach einem der Ansprüche 1 bis 3, wobei der Träger dazu konfiguriert ist, ferner Authentifizierungsdaten zu unterstützen, wobei die Übertragungsvorrichtung ferner mit dritten Authentifizierungsmitteln verbunden ist, die dazu konfiguriert sind, den empfangenden Träger des signierten Zugangsanforderungsdatenelements über die Authentifizierungsdaten zu authentifizieren, wobei die Übertragungsvorrichtung ferner dazu konfiguriert ist, Authentifizierungsdaten zu empfangen und an die dritten Authentifizierungsmittel zu übertragen, die dazu konfiguriert sind, die Authentifizierungsdaten über die Übertragungsvorrichtung zu empfangen,
das Verfahren ferner umfasst;
- einen Schritt zum Übertragen von Authentifizierungsdaten aus dem Träger an die Übertragungsvorrichtung; und
- einen Schritt zum Verarbeiten der Authentifizierungsdaten aus dem Träger durch die Übertragungsvorrichtung.

5. Verfahren zur Zugangskontrolle nach einem der Ansprüche 1 bis 4, wobei die Lesevorrichtung ferner dazu konfiguriert ist, Authentifizierungsdaten zu übertragen, wobei das Träger dazu konfiguriert ist, die Authentifizierungsdaten aus der Lesevorrichtung zu empfangen und zu verarbeiten,
das Verfahren ferner umfasst:
- einen Schritt zum Übertragen von Authentifizierungsdaten aus der Lesevorrichtung an den Träger;
- einen Schritt zum Verarbeiten der Authentifizierungsdaten aus der Lesevorrichtung durch den Träger.

6. Verfahren zur Zugangskontrolle nach einem der Ansprüche 1 bis 5, wobei die Übertragungsvorrichtung ferner dazu konfiguriert ist, Authentifizierungsdaten zu übertragen, wobei der Träger dazu konfiguriert ist, die Authentifizierungsdaten aus der Übertragungsvorrichtung zu empfangen und zu verarbeiten,
das Verfahren ferner umfasst:
- einen Schritt zum Übertragen von Authentifizierungsdaten aus der Übertragungsvorrichtung an den Träger,
- einen Schritt zum Verarbeiten der Authentifizierungsdaten aus der Übertragungsvorrichtung durch den Träger.

7. Verfahren zur Zugangskontrolle nach einem der Ansprüche 1 bis 6, wobei das Zugangskontrollsystem ferner Mittel zum Verschlüsseln des zu signierenden Zugangsanforderungsdatenelements oder des signierten Zugangsanforderungsdatenelements umfasst,
- die Übertragungsvorrichtung ferner dazu konfiguriert ist, das verschlüsselte, signierte Zugangsanforderungsdatenelement an den Träger zu übertragen,
- die Lesevorrichtung ferner dazu konfiguriert ist, das verschlüsselte, signierte Zugangsanforderungsdatenelement zu lesen und zu entschlüsseln,
das Verfahren ferner umfasst:
- einen Schritt zum Verschlüsseln des zu signierenden Zugangsanforderungsdatenelements oder des signierten Zugangsanforderungsdatenelements, und
- einen Schritt zum Entschlüsseln des verschlüsselten und signierten Zugangsanforderungsdatenelements durch die Lesevorrichtung.

8. Verfahren zur Zugangskontrolle nach Anspruch 7, wobei:
- die Übertragungsvorrichtung ferner dazu konfiguriert ist, das verschlüsselte, signierte Zugangsanforderungsdatenelement, das durch den Träger unterstützt wird, zu entschlüsseln,
das Verfahren ferner umfasst:
- einen zusätzlichen Schritt zum Entschlüsseln des verschlüsselten, signierten Zugangsanforderungsdatenelements, das durch den Träger unterstützt wird, und
- einen Schritt zum Übertragen eines neuen verschlüsselten, signierten Zugangsanforderungsdatenelements an den Träger, um das durch den Träger unterstützte verschlüsselte, signierte Zugangsanforderungsdatenelement zu ersetzen.

9. Verfahren zur Zugangskontrolle nach einem der Ansprüche 1 bis 8, wobei der Träger ferner dazu konfiguriert ist, Änderungsdaten der Referenzdatenbank zu unterstützen,
das Verfahren ferner umfasst:
- einen Schritt zum Übertragen der Änderungsdaten aus dem Träger an die Lesevorrichtung, und
- einen Schritt zum Ändern der Referenzdatenbank durch Ändern oder Löschen einer der Teilmengen oder durch Hinzufügen einer zusätzlichen Teilmenge.

10. Verfahren zur Zugangskontrolle nach einem der Ansprüche 1 bis 9, wobei der Träger dazu konfiguriert ist, zusätzliche Daten zu unterstützen, wobei die Lesevorrichtung und/oder die Übertragungsvorrichtung dazu konfiguriert sind, die zusätzlichen Daten zu verarbeiten,
das Verfahren ferner umfasst:
- einen Schritt zum Übertragen der zusätzlichen Daten aus dem Träger an die Lesevorrichtung und/oder die Übertragungsvorrichtung, und
- einen Schritt zum Verarbeiten der zusätzlichen Daten durch die Lesevorrichtung und/oder die Übertragungsvorrichtung.

11. Verfahren zur Zugangskontrolle nach einem der Ansprüche 1 bis 10, wobei einer oder mehrere der Authentifizierungsschritte und/oder einer oder mehrere der Vergleichsschritte und/oder der Verifizierungsschritt durchgeführt werden, ohne dass die in diesen Schritten verwendeten Mittel mit einem Element außerhalb des Systems kommunizieren.

12. Übertragungsvorrichtung, die zu einem Zugangskontrollsystem gehört, umfassend:
- einen Träger, der mindestens durch eine eindeutige, zuvor signierte und authentifizierbare Kennung definiert ist, wobei der Träger dazu konfiguriert ist, mindestens ein signiertes Zugangsanforderungsdatenelement zu unterstützen;
- ein Datenverwaltungssystem, das mehrere Aufzeichnungen umfasst, wobei jede Aufzeichnung ein spezifisches Datenelement darstellt und jedes spezifische Datenelement von einem der folgenden Parameter abhängt:
▪ einer Kennung eines berechtigten Benutzers;
▪ einer Information zu einem berechtigten Zeitraum;
▪ Information zu einem berechtigten Zeitfenster;
▪ einer Information zu einem berechtigten geografischen Bereich;
▪ einer Information zur Aktivität des berechtigten Benutzers;
- eine Vorrichtung zum Generieren eines zu signierenden Zugangsanforderungsdatenelements aus mehreren der spezifischen Daten und der eindeutigen Kennung des Trägers,
- eine Lesevorrichtung, die dazu konfiguriert ist, das signierte Zugangsanforderungsdatenelement von dem Träger zu lesen und ein Zugangsberechtigungssignal an eine Sperrvorrichtung zu übertragen;
- erste Authentifizierungsmittel, die mit der Lesevorrichtung verbunden und dazu konfiguriert sind, die signierten Zugangsanforderungsdaten zu authentifizieren.
- zweite Authentifizierungsmittel, die mit der Lesevorrichtung verbunden und dazu konfiguriert sind, den Träger zu authentifizieren;
- Verifizierungsmittel, die mit der Lesevorrichtung verbunden und dazu konfiguriert sind, das Signaturdatenelement des signierten Zugangsanforderungsdatenelements zu verifizieren;
- erste Vergleichsmittel, die mit der Lesevorrichtung verbunden und dazu konfiguriert sind, die eindeutige Kennung des Trägers mit dem zweiten Datenelement des signierten Zugangsanforderungsdatenelements zu vergleichen;
- zweite Vergleichsmittel, die mit der Lesevorrichtung und einer Referenzdatenbank verbunden sind, in der eine oder mehrere spezifische Datenteilmengen registriert sind, wobei jede Teilmenge eine vordefinierte Zugangsberechtigung darstellt, die eine Funktion mehrerer der Parameter ist, wobei die zweiten Vergleichsmittel dazu konfiguriert sind, das erste Datenelement der signierten Zugangsanforderungsdatenelements mit den Datenteilmengen zu vergleichen;
wobei die Übertragungsvorrichtung mit dem Verwaltungssystem verbunden ist und umfasst:
- Mittel zum Lesen der eindeutigen Kennung des Trägers,
- Mittel zum Empfangen des zu signierenden Zugangsanforderungsdatenelements,
- Mittel zum Signieren des zu signierenden Zugangsanforderungsdatenelements, um ein signiertes Zugangsanforderungsdatenelement zu erhalten, die ein erstes Datenelement, das mehrere der spezifischen Daten darstellt, ein zweites Datenelement, das sich auf die eindeutige Kennung des Trägers bezieht, und ein Signaturdatenelement umfassen,
- Mittel zum Übermitteln des signierten Zugangsanforderungsdatenelements an den Träger.

13. Träger, der mindestens durch eine eindeutige Kennung definiert ist, die zuvor signiert und authentifizierbar ist und zu einem Zugangskontrollsystem gehört, umfassend:
- ein Datenverwaltungssystem, das mehrere Aufzeichnungen umfasst, wobei jede Aufzeichnung ein spezifisches Datenelement darstellt und jedes spezifische Datenelement von einem der folgenden Parameter abhängt:
▪ einer Kennung eines berechtigten Benutzers;
▪ einer Information zu einem berechtigten Zeitraum;
▪ einer Information zu einem berechtigten Zeitfenster;
▪ einer Information zu einem berechtigten geografischen Bereich;
▪ einer Information zur Aktivität des berechtigten Benutzers;
- eine Vorrichtung zum Generieren eines zu signierenden Zugangsanforderungsdatenelements aus mehreren der spezifischen Daten und der eindeutigen Kennung des Trägers,
- Mittel zum Lesen der eindeutigen Kennung des Trägers, der die signierten Zugangsanforderungsdaten empfängt, wobei die Lesemittel mit der Generierungsvorrichtung verbunden sind,
- Mittel zum Signieren des zu signierenden Zugangsanforderungsdatenelements, um ein signiertes Zugangsanforderungsdatenelement zu erhalten, die ein erstes Datenelement, das mehrere der spezifischen Daten darstellt, ein zweites Datenelement, das sich auf die eindeutige Kennung des Trägers bezieht, und ein Signaturdatenelement umfassen,
- eine Übertragungsvorrichtung, die dazu konfiguriert ist, das signierte Zugangsanforderungsdatenelement an den Träger zu übertragen, wobei die Übertragungsvorrichtung mit den Signaturmitteln und dem Verwaltungssystem verbunden ist;
- ein Lesevorrichtung, die dazu konfiguriert ist, das signierte Zugangsanforderungsdatenelement von dem Träger zu lesen und ein Zugangsberechtigungssignal an eine Sperrvorrichtung zu übertragen;
- erste Authentifizierungsmittel, die mit der Lesevorrichtung verbunden und dazu konfiguriert sind, die signierten Zugangsanforderungsdaten zu authentifizieren;
- zweite Authentifizierungsmittel, die mit der Lesevorrichtung verbunden und dazu konfiguriert sind, den Träger zu authentifizieren;
- Verifizierungsmittel, die mit der Lesevorrichtung verbunden und dazu konfiguriert sind, das Signaturdatenelement des signierten Zugangsanforderungsdatenelements zu verifizieren;
- erste Vergleichsmittel, die mit der Lesevorrichtung verbunden und dazu konfiguriert sind, die eindeutige Kennung des Trägers mit dem zweiten Datenelement des signierten Zugangsanforderungsdatenelements zu vergleichen;
- zweite Vergleichsmittel, die mit der Lesevorrichtung und einer Referenzdatenbank verbunden sind, in der eine oder mehrere spezifische Datenteilmengen registriert sind, wobei jede Teilmenge eine vordefinierte Zugangsberechtigung darstellt, die eine Funktion mehrerer der Parameter ist, wobei die zweiten Vergleichsmittel dazu konfiguriert sind, das erste Datenelement der signierten Zugangsanforderungsdatenelements mit den Datenteilmengen zu vergleichen;
wobei der Träger umfasst:
- Mittel zum Empfangen mindestens eines signierten Zugangsanforderungsdatenelements;
- Mittel zum Unterstützen des signierten Zugangsanforderungsdatenelements;
- Mittel zum Senden des signierten Zugangsanforderungsdatenelements;

14. Lesevorrichtung, die zu einem Zugangskontrollsystem gehört, umfassend
- einen Träger, der mindestens durch eine eindeutige, zuvor signierte und authentifizierbare Kennung definiert ist, wobei der Träger dazu konfiguriert ist, mindestens ein signiertes Zugangsanforderungsdatenelement zu unterstützen;
- ein Datenverwaltungssystem, das mehrere Aufzeichnungen umfasst, wobei jede Aufzeichnung ein bestimmtes Datenelement darstellt und jedes bestimmte Datenelement von einem der folgenden Parameter abhängt:
▪ einer Kennung eines berechtigten Benutzers;
▪ einer Information zu einem berechtigten Zeitraum;
▪ einer Information zu einem berechtigten Zeitfenster;
▪ einer Information zu einem berechtigten geografischen Bereich;
▪ einer Information zur Aktivität des berechtigten Benutzers;
- eine Vorrichtung zum Generieren eines zu signierenden Zugangsanforderungsdatenelements aus mehreren der spezifischen Daten und der eindeutigen Kennung des Trägers,
- Mittel zum Lesen der eindeutigen Kennung des Trägers, der die signierten Zugangsanforderungsdaten empfängt, wobei die Lesemittel mit der Generierungsvorrichtung verbunden sind,
- Mittel zum Signieren des zu signierenden Zugangsanforderungsdatenelements, um ein signiertes Zugangsanforderungsdatenelement zu erhalten, die ein erstes Datenelement, das mehrere der spezifischen Daten darstellt, ein zweites Datenelement, das sich auf die eindeutige Kennung des Trägers bezieht, und ein Signaturdatenelement umfassen,
- eine Übertragungsvorrichtung, die dazu konfiguriert ist, das signierte Zugangsanforderungsdatenelement an den Träger zu übertragen, wobei die Übertragungsvorrichtung mit den Signaturmitteln und dem Verwaltungssystem verbunden ist;
wobei die Lesevorrichtung umfasst:
- Mittel zum Lesen des signierten Zugangsanforderungsdatenelements,
- erste Authentifizierungsmittel, die dazu konfiguriert sind, die signierten Zugangsanforderungsdaten zu authentifizieren;
- zweite Authentifizierungsmittel, die dazu konfiguriert sind, den Träger zu authentifizieren;
- Verifizierungsmittel, die dazu konfiguriert sind, das Signaturdatenelement des signierten Zugangsanforderungsdatenelements zu verifizieren;
- erste Vergleichsmittel, die dazu konfiguriert sind, die eindeutige Kennung des Trägers mit dem zweiten Datenelement des signierten Zugangsanforderungsdatenelements zu vergleichen;
- zweite Vergleichsmittel, die mit einer Referenzdatenbank verbunden sind, in der eine oder mehrere spezifische Datenteilmengen registriert sind, wobei jede Teilmenge eine vordefinierte Zugangsberechtigung darstellt, die eine Funktion mehrerer der Parameter ist, wobei die zweiten Vergleichsmittel dazu konfiguriert sind, das erste Datenelement der signierten Zugangsanforderungsdatenelements mit den Datenteilmengen zu vergleichen;
- Mittel zum Übertragen eines Zugangsberechtigungssignals an eine Sperrvorrichtung.

15. Zugangskontrollsystem, umfassend eine Übertragungsvorrichtung nach Anspruch 12, einen Träger nach Anspruch 13 und eine Lesevorrichtung nach Anspruch 14.

16. Zugangskontrollsystem nach Anspruch 15, umfassend ferner Mittel zum Verschlüsseln des zu signierenden Zugangsanforderungsdatenelements oder des signierten Zugangsanforderungsdatenelements.

17. Zugangskontrollsystem nach Anspruch 16, wobei:
- die Übertragungsvorrichtung ferner dazu konfiguriert ist, das verschlüsselte, signierte Zugangsanforderungsdatenelement an den Träger zu übertragen und vorzugsweise das verschlüsselte, signierte Zugangsanforderungsdatenelement, das durch den Träger unterstützt wird, zu entschlüsseln, und
- die Lesevorrichtung ferner dazu konfiguriert ist, um das verschlüsselte, signierte Zugangsanforderungsdatenelement zu lesen und zu entschlüsseln.

## Claims

1. An access control method in an access control system comprising:
- a medium at least defined by a previously signed and authenticatable unique identifier, said medium being configured to support at least one signed item of access request data;
- a data management system comprising a plurality of records, each record representing a specific item of data, and each specific item of data being a function of one of the following parameters:
▪ an authorized user ID;
▪ an item of information about an authorized period;
▪ an item of information about an authorized time slot;
▪ an item of information about an authorized geographical area;
▪ an item of information about an activity of said authorized user;
- a device for generating an item of access request data to be signed, based on a plurality of said specific items of data and on the unique identifier of the medium,
- means for reading the unique identifier of said medium receiving the signed item of access request data, said reading means being connected to said generating device,
- means for signing said item of access request data to be signed in order to obtain a signed item of access request data comprising a first item of data representative of a plurality of said specific items of data, a second item of data relating to said unique identifier of the medium, and an item of signature data,
- a transfer device configured to transfer said signed item of access request data to said medium, said transfer device being connected to said signing means and to said management system;
- a reading device configured to read said signed item of access request data from said medium and to transmit an access authorization signal to a locking device;
- first authentication means connected to said reading device and configured to authenticate said signed item of access request data;
- second authentication means connected to said reading device and configured to authenticate the medium;
- verification means connected to said reading device and configured to verify the item of signature data of said signed item of access request data;
- first comparison means connected to said reading device and configured to compare the unique identifier of the medium with said second item of data of said signed item of access request data;
- second comparison means connected to said reading device and to a reference database in which one or more subsets of specific data are saved, each subset being representative of a predefined access authorization which is a function of a plurality of said parameters, said second comparison means being configured to compare the first item of data of said signed item of access request data with said subsets of data;
said access control method being executed by said access control system and comprising:
- a step of recording said specific data in said data management system;
- a step of supplying the medium defined by a previously signed and authenticatable unique identifier,
- a step, via said reading means, of reading the unique identifier of said medium,
- a step, via said generating device, of generating said item of access request data to be signed; said step of generating said item of access request data to be signed being performed after said step of reading the previously signed unique identifier of said medium;
- a step, via said signing means, of signing said item of access request data to be signed and the unique identifier of the medium in order to obtain said signed item of access request data;
- a step of transferring said signed item of access request data from said transfer device to said medium defined by the unique identifier of the second item of data of said signed item of access request data;
- a step of saving one or more subsets of specific data in the reference database,
- a step, via said reading device, of reading said signed item of access request data supported by said medium;
- a step of authenticating the medium, via said second authentication means,
- a step of authenticating, via said first authentication means, said signed item of access request data and a step of verifying, via said verification means, the item of signature data of said signed item of access request data, and
- a step, via said first comparison means, of comparing the unique identifier defining the medium with that of the second item of data of said signed item of access request data,
- a step, via said second comparison means, of comparing the first item of data of said signed item of access request data with said subsets saved in the reference database;
- a step of transmitting said access authorization signal from said reading device to said locking device.

2. The access control method according to claim 1, **characterized in that** a new signed item of access request data or one to be signed is signed by the signing means or generated by the generating device at the request of the user of the medium for each new period of use of said medium.

3. The access control method according to one of claims 1 or 2, in which said medium is configured to furthermore support authentication data and in which the reading device is configured to receive the authentication data from said medium and is configured to transmit said data to said second authentication means which are configured to receive the authentication data via said reading device,
said method further comprises:
- a step of transmitting authentication data from the medium to said reading device; and
- a step of processing said authentication data originating from said medium, by said reading device.

4. The access control method according to one of claims 1 to 3, in which said medium is configured to furthermore support authentication data, in which the transfer device is further connected to third authentication means configured to authenticate the medium receiving the signed item of access request data via the authentication data, in which the transfer device is further configured to receive authentication data and transmit said data to said third authentication means which are configured to receive the authentication data via said transfer device,
said method further comprises;
- a step of transmitting authentication data from the medium to the transfer device; and
- a step of processing said transfer data originating from said medium, by said transfer device.

5. The access control method according to one of claims 1 to 4, in which said reading device is further configured to transmit authentication data, in which the medium is configured to receive and process said authentication data originating from said reading device,
said method further comprises:
- a step of transmitting authentication data from the reading device to said medium;
- a step of processing, by said medium, said authentication data originating from said reading device.

6. The access control method according to one of claims 1 to 5, in which said transfer device is further configured to transmit authentication data, in which the medium is configured to receive and process authentication data originating from said transfer device,
said method further comprises:
- a step of transmitting authentication data from the transfer device to said medium,
- a step of processing, by said medium, said authentication data originating from said transfer device.

7. The access control method according to one of claims 1 to 6, in which said access control system further comprises means for encrypting said item of access request data to be signed or said signed item of access request data,
- said transfer device is furthermore configured to transfer said encrypted signed item of access request data to said medium,
- said reading device is furthermore configured to read and decrypt said encrypted signed item of access request data,
said method further comprises:
- a step of encrypting said item of access request data to be signed or said signed item of access request data, and
- a step of decrypting said encrypted signed item of access request data by said reading device.

8. The access control method according to claim 7, in which:
- said transfer device is furthermore configured to decrypt said encrypted signed item of access request data supported by said medium,
said method further comprises:
- a further step of decrypting said encrypted signed item of access request data supported by said medium, and
- a step of transferring a new encrypted signed item of access request data to said medium to replace said encrypted signed item of access request data supported by said medium.

9. The access control method according to one of claims 1 to 8, in which said medium is further configured to support modification data of said reference database,
said method further comprises:
- a step of transferring said modification data from said medium to said reading device, and
- a step of modifying said reference database by modifying or deleting one of said subsets, or by adding an additional subset.

10. The access control method according to one of claims 1 to 9, in which said medium is configured to furthermore support additional data, in which the reading device and/or the transfer device are configured to process said additional data,
the method further comprises:
- a step of transferring said additional data from the medium to the reading device and/or transfer device, and
- a step of processing said additional data by said reading device and/or by said transfer device.

11. The access control method according to one of claims 1 to 10, whereby one or more of the authentication steps and/or one or more of the comparison steps and/or the verification step are implemented without the means employed in these steps communicating with any element external to said system.

12. A transfer device belonging to an access control system comprising:
- a medium at least defined by a previously signed and authenticatable unique identifier, said medium being configured to support at least one signed item of access request data;
- a data management system comprising a plurality of records, each record representing a specific item of data, and each specific item of data being a function of one of the following parameters:
▪ an authorized user ID;
▪ an item of information about an authorized period;
▪ an item of information about an authorized time slot;
▪ an item of information about an authorized geographical area;
▪ an item of information about an activity of said authorized user;
- a device for generating an item of access request data to be signed, based on a plurality of said specific items of data and on the unique identifier of the medium,
- a reading device configured to read a signed item of access request data from said medium and to transmit an access authorization signal to a locking device;
- first authentication means connected to said reading device and configured to authenticate said signed item of access request data;
- second authentication means connected to said reading device and configured to authenticate the medium;
- verification means connected to said reading device and configured to verify the item of signature data of said signed item of access request data;
- first comparison means connected to said reading device and configured to compare the unique identifier of the medium with said second item of data of said signed item of access request data;
- second comparison means connected to said reading device and to a reference database in which one or more subsets of specific data are saved, each subset being representative of a predefined access authorization which is a function of a plurality of said parameters, said second comparison means being configured to compare the first item of data of said signed item of access request data with said subsets of data;
said transfer device being connected to the management system and comprising:
- means for reading the unique identifier of said medium,
- means for receiving the item of access request data to be signed,
- means for signing the item of access request data to be signed in order to obtain a signed item of access request data comprising a first item of data representative of a plurality of said specific items of data, a second item of data relating to said unique identifier of the medium, and an item of signature data,
- means for sending said signed item of access request data to the medium.

13. A medium at least defined by a previously signed and authenticatable unique identifier and belonging to an access control system comprising:
- a data management system comprising a plurality of records, each record representing a specific item of data, and each specific item of data being a function of one of the following parameters:
▪ an authorized user ID;
▪ an item of information about an authorized period;
▪ an item of information about an authorized time slot;
▪ an item of information about an authorized geographical area;
▪ an item of information about an activity of said authorized user;
- a device for generating an item of access request data to be signed, based on a plurality of said specific items of data and on the unique identifier of the medium,
- means for reading the unique identifier of said medium receiving the signed item of access request data, said reading means being connected to said generating device,
- means for signing said item of access request data to be signed in order to obtain a signed item of access request data comprising a first item of data representative of a plurality of said specific items of data, a second item of data relating to said unique identifier of the medium, and an item of signature data,
- a transfer device configured to transfer said signed item of access request data to said medium, said transfer device being connected to said signing means and to said management system;
- a reading device configured to read said signed item of access request data from said medium and to transmit an access authorization signal to a locking device;
- first authentication means connected to said reading device and configured to authenticate said signed item of access request data;
- second authentication means connected to said reading device and configured to authenticate the medium;
- verification means connected to said reading device and configured to verify the item of signature data of said signed item of access request data;
- first comparison means connected to said reading device and configured to compare the unique identifier of the medium with said second item of data of said signed item of access request data;
- second comparison means connected to said reading device and to a reference database in which one or more subsets of specific data are saved, each subset being representative of a predefined access authorization which is a function of a plurality of said parameters, said second comparison means being configured to compare the first item of data of said signed item of access request data with said subsets of data;
said medium comprising:
- means for receiving at least one signed item of access request data;
- means for supporting said signed item of access request data;
- means for sending said signed item of access request data.

14. A reading device belonging to an access control system comprising
- a medium at least defined by a previously signed and authenticatable unique identifier, said medium being configured to support at least one signed item of access request data;
- a data management system comprising a plurality of records, each record representing a specific item of data, and each specific item of data being a function of one of the following parameters:
▪ an authorized user ID;
▪ an item of information about an authorized period;
▪ an item of information about an authorized time slot;
▪ an item of information about an authorized geographical area;
▪ an item of information about an activity of said authorized user;
- a device for generating an item of access request data to be signed, based on a plurality of said specific items of data and on the unique identifier of the medium,
- means for reading the unique identifier of said medium receiving the signed item of access request data, said reading means being connected to said generating device,
- means for signing said item of access request data to be signed in order to obtain a signed item of access request data comprising a first item of data representative of a plurality of said specific items of data, a second item of data relating to said unique identifier of the medium, and an item of signature data,
- a transfer device configured to transfer said signed item of access request data to said medium, said transfer device being connected to said signing means and to said management system;
said reading device comprising:
- means for reading said signed item of access request data,
- first authentication means configured to authenticate said signed item of access request data;
- second authentication means configured to authenticate the medium;
- verification means configured to verify the item of signature data of said signed item of access request data;
- first comparison means configured to compare the unique identifier of the medium with said second item of data of said signed item of access request data;
- second comparison means connected to a reference database in which one or more subsets of specific data are saved, each subset being representative of a predefined access authorization which is a function of a plurality of said parameters, said second comparison means being configured to compare the first item of data of said signed item of access request data with said subsets of data;
- means for transmitting an access authorization signal to a locking device.

15. An access control system comprising a transfer device according to claim 12, a medium according to claim 13 and a reading device according to claim 14.

16. The access control system according to claim 15, further comprising means for encrypting said item of access request data to be signed or said signed item of access request data.

17. The access control system according to claim 16, wherein:
- said transfer device is furthermore configured to transfer said encrypted signed item of access request data to said medium, and preferably to decrypt said encrypted signed item of access request data supported by said medium, and
- said reading device is furthermore configured to read and decrypt said encrypted signed item of access request data.
